# EUROPEAN PATENT APPLICATION

(11) **EP 4 296 889 A1**
(43) Date of publication of application: **27.12.2023**
(21) Application number: 22770635.5
(22) Date of filing: 18.03.2022
(51) Int. Cl.: G06K 9/00

(54) **RECOGNITION MODEL TRAINING METHOD AND APPARATUS**

(30) Priority: 18.03.2021 CN 202110292902
(71) Applicant: Huawei Technologies Co., Ltd., Shenzhen, Guangdong 518129 (CN)
(72) Inventor: WANG, Tingyang, Shenzhen, Guangdong 518129 (CN); SU, Fei, Shenzhen, Guangdong 518129 (CN)
(74) Representative: Körber, Martin Hans
(86) International application number: PCT/CN2022/081733
(87) International publication number: WO 2022/194283

(57) **Abstract**

Embodiments of this application provide a recognition model training method and apparatus, to improve image annotation efficiency, and further optimize a recognition model. The method may specifically include: obtaining a first image, where the first image may include a first semantic object and a second semantic object; automatically annotating boundary information between the first semantic object and the second semantic object based on a location relationship between the first semantic object and the second semantic object; and updating a bounding box of the first semantic object. This can effectively improve image annotation efficiency, and further optimize precision and effectiveness of a recognition model.

## Description

### CROSS-REFERENCE TO RELATED APPLICATIONS

This application claims priority to Chinese Patent Application No. 202110292902.7, filed with the China National Intellectual Property Administration on March 18, 2021 and entitled "RECOGNITION MODEL TRAINING METHOD AND APPARATUS", which is incorporated herein by reference in its entirety.

### TECHNICAL FIELD

This application relates to the field of image processing technologies, and in particular, to a recognition model training method and apparatus.

### BACKGROUND

In fields such as autonomous driving, smart healthcare, and smart city, a deep learning-based recognition model needs to be used to recognize a target object in an application scenario. The recognition model can be obtained only by training a large amount of annotated sample data.

However, most sample data corresponding to the recognition model is an image. Because an existing recognition model cannot accurately recognize a boundary between different semantic objects in the image (for example, a boundary between a vehicle and a pedestrian), a boundary of a region in which a specific semantic object (for example, a road surface) is located in the image, and a boundary of a region that is formed through isolation by a specific semantic object (for example, a green belt) and that is in the image, a large quantity of manual annotation is needed, and the boundary between the different semantic objects is repeatedly annotated, resulting in low annotation efficiency of such sample data.

Therefore, how to improve data annotation efficiency and obtain a recognition model with high accuracy is a technical problem to be resolved in this application.

### SUMMARY

This application provides a recognition model training method and apparatus, to improve image annotation efficiency, and further optimize a recognition model.

According to a first aspect, an embodiment of this application provides a recognition model training method. The method includes: first, obtaining a first image, where the first image may include at least two semantic objects, and the at least two semantic objects may specifically include a first semantic object and a second semantic object; then, updating a bounding box of the first semantic object based on a first location relationship (for example, external tangency, internal tangency, and intersection) between a first bounding box of the first semantic object and a second bounding box of the second semantic object, to obtain an updated first bounding box of the first semantic object, where the updated first bounding box and the second bounding box have a same first target directed line segment; finally, generating a second image based on the first image, the second bounding box, and the updated first bounding box, where the second image has a boundary mark, and the boundary mark may indicate the first target directed line segment; and inputting the second image into a recognition model for training, to obtain a trained recognition model.

In this embodiment of this application, boundary information between the first semantic object and the second semantic object can be automatically annotated based on a location relationship between the first semantic object and the second semantic object, and the bounding box of the first semantic object is updated, to effectively improve image annotation efficiency. This achieves effect of obtaining annotated sample data at low costs and high efficiency, and further optimizes accuracy and effectiveness of the recognition model.

The first bounding box that needs to be updated may be preset, or may be selected by a user. This is not specifically limited in this embodiment of this application.

In a possible design, before the updating a bounding box of the first semantic object, the method further includes: receiving a first operation, and determining the first bounding box as a first layer and the second bounding box as a second layer based on the first operation, where the first target directed line segment is located on the second layer.

In this design, the user can select, based on an actual requirement, a semantic object whose bounding box needs to be updated, to obtain an annotated image that meets a user requirement. This effectively improves user experience.

In this embodiment of this application, there are a plurality of manners of obtaining the first image, and the first image may be obtained based on virtual data or real data.

Manner 1: Obtain a bounding box of at least one semantic object, and perform random combination on the bounding box of the at least one semantic object to obtain the first image.

It should be understood that, "random combination" means that bounding boxes of different semantic objects are put together. A location relationship between semantic objects in an image generated by performing "random combination" is not specifically limited in this embodiment of this application. For example, a vehicle driving environment image may be obtained by performing random combination on complete bounding boxes respectively corresponding to common road objects in the vehicle driving environment such as a vehicle, a pedestrian, and a green belt. In this image, a bounding box of the vehicle may be tangent to a bounding box of the green belt and separated from a bounding box of the pedestrian.

In the manner 1, labor and material costs can be saved, so that the first image can be quickly obtained. This effectively improves efficiency of subsequently obtaining an annotated sample.

Manner 2: Obtain a third image (namely, the real data), preprocess the third image according to a preset algorithm (a target detection algorithm) to obtain an approximate contour of each semantic object in the third image, then manually correct the contour of each semantic object, and annotate a complete bounding box corresponding to each semantic object, to obtain the first image.

In the manner 2, accuracy of the first image can be ensured, so that an annotated image subsequently obtained is more accurate.

In a possible design, a process of updating the bounding box of the first semantic object based on the first location relationship between the first bounding box of the first semantic object and the second bounding box of the second semantic object may specifically include: step 1: determining at least two intersection points between the first bounding box and the second bounding box; step 2: splitting the first bounding box into at least two first directed line segments and splitting the second bounding box into at least two second directed line segments based on the at least two intersection points; step 3: determining, based on the first location relationship, a first directed line segment located outside the second bounding box and a second directed line segment located inside the first bounding box; and step 4: determining the updated first bounding box based on the first directed line segment located outside the second bounding box and the second directed line segment located inside the first bounding box. The first directed line segment and the second directed line segment each include a start point and an end point.

In this design, the updated first bounding box can be obtained only based on a location relationship between the first directed line segment obtained by splitting the first bounding box and the second bounding box, and a location relationship between the second directed line segment obtained by splitting the second bounding box and the first bounding box. Calculation is simple and efficient. This effectively improves annotation efficiency of a boundary between the first bounding box and the second bounding box.

In a possible design, the determining the updated first bounding box based on the first directed line segment located outside the second bounding box and the second directed line segment located inside the first bounding box may be specifically: connecting the first directed line segment located outside the second bounding box and the second directed line segment located inside the first bounding box, to obtain the updated first bounding box.

In this design, automatic annotation of the first bounding box is achieved, to further improve annotation efficiency of the first image.

In a possible design, the method further includes: when determining, based on the first location relationship, that the at least two second directed line segments includes a second directed line segment located on the first bounding box, determining that the second directed line segment is the second directed line segment located inside the first bounding box; or when determining, based on the first location relationship, that the at least two first directed line segments include a first directed line segment located on the second bounding box, determining that the first directed line segment is a first directed line segment located inside the second bounding box.

In this design, a rule for determining a relationship between a line segment and a bounding box is flexibly set, so that a first bounding box updated based on a line segment obtained by splitting the bounding box is more accurate. This effectively improves image annotation accuracy.

A process of determining the at least two intersection points between the first bounding box and the second bounding box in step 1 has different implementations for different line segments.

### 1. Intersection line segments.

In a possible design, the determining at least two intersection points between the first bounding box and the second bounding box includes: determining that any first directed line segment is not parallel to any second directed line segment, and there is a first intersection point between the any first directed line segment and the any second directed line segment; determining that the first intersection point is on the any first directed line segment and the any second directed line segment; and determining the first intersection point as any intersection point in the at least two intersection points if the first intersection point is not the end point of the any first directed line segment or the end point of the any second directed line segment.

In this design, an intersection point between the intersection line segments is determined as an intersection point between the first bounding box and the second bounding box only when the intersection point between the intersection line segments is not located at an end point of the line segment, to effectively prevent the intersection point between the first bounding box and the second bounding box from being determined repeatedly.

In a possible design, the determining that the first intersection point is on the any first directed line segment and the any second directed line segment includes: determining that a distance between the first intersection point and the any first directed line segment is less than a first threshold, to determine that the first intersection point is on the any first directed line segment; and/or determining that a distance between the first intersection point and the any second directed line segment is less than a second threshold, to determine that the first intersection point is on the any second directed line segment.

In this design, a distance between an intersection point and a line segment is determined in an approximate manner, so that flexibility of setting the intersection point is effectively improved, the intersection point is determined more accurately, and a line segment obtained by splitting the first bounding box and the second bounding box based on the intersection point is more accurate.

In a possible design, the determining at least two intersection points between the first bounding box and the second bounding box includes: determining that there is a second intersection point between the any first directed line segment and the any second directed line segment; and using the second intersection point and the first intersection point as a same intersection point when a distance between the second intersection point and the first intersection point is less than a third threshold.

In this design, flexibility of setting an intersection point is further improved, so that the first bounding box and the second bounding box are subsequently split into line segments in fewer cases. This effectively improves efficiency of updating the first bounding box, and further improves image annotation efficiency.

### 2. Parallel line segments.

In a possible design, the determining at least two intersection points between the first bounding box and the second bounding box may include: determining that any first directed line segment is parallel to any second directed line segment, where the any first directed line segment includes a first start point and a first end point, and the any second directed line segment includes a second start point and a second end point; if determining that a distance between the first start point or the first end point and the any second directed line segment is less than a fourth threshold, determining that the any first directed line segment coincides with the any second directed line segment; or if determining that a distance between the second start point or the second end point and the any first directed line segment is less than a fifth threshold, determining that the any first directed line segment coincides with the any second directed line segment; and determining the first start point and/or the second start point as any intersection point in the at least two intersection points.

In this design, coordinate values of each point on the any first directed line segment and the any second directed line segment are irrational numbers. In view of this, it is determined in an approximate manner whether the any first directed line segment coincides with the any second directed line segment. A coincident line segment is flexibly determined, so that an intersection point determined based on the coincident line segment is more accurate.

In a possible design, the determining the first start point and/or the second start point as any intersection point in the at least two intersection points includes: determining the second start point as the any intersection point between the first bounding box and the second bounding box when the second start point is on the any first directed line segment; or determining the first start point as the any intersection point between the first bounding box and the second bounding box when the first start point is on the any second directed line segment.

In this design, the second start point or the first start point is determined as an intersection point between the first bounding box and the second bounding box only when it is determined that the first start point or the second start point is located on the coincident line segment. This can further improve accuracy of an intersection point between the determined coincident line segments.

In a possible design, the at least two semantic objects further include a third semantic object. After the updated first bounding box of the first semantic object is obtained, the method may further include: determining that a third bounding box of the third semantic object is located inside the first bounding box; if determining that the third bounding box of the third semantic object is internally tangent to the updated first bounding box, updating the bounding box of the first semantic object again, to obtain a first bounding box that is obtained after a second update and that is of the first semantic object, where the third bounding box and the first bounding box obtained after the second update have a same second target directed line segment; generating a fourth image based on the first image, the second bounding box, the third bounding box, and the first bounding box obtained after the second update; and retraining the trained recognition model based on the fourth image, to obtain a new recognition model.

In this design, after a first update is performed on the first bounding box, if a location relationship between the first bounding box and a bounding box of another semantic object changes (for example, becomes internal tangency), the second update is performed on the first bounding box on which the first update is performed, to improve boundary annotation precision of a semantic object having a plurality of location relationships. This can effectively improve sample annotation accuracy, and optimize the recognition model.

In a possible design, the updated first bounding box includes a first sub-bounding box and a second sub-bounding box when the first location relationship is intersection. That is, the first bounding box is truncated by the second bounding box, where "truncated" may be understood as that the first bounding box is occluded by the second bounding box. The second bounding box and each of the first sub-bounding box and the second sub-bounding box have a common boundary line segment.

In this design, the first bounding box can be automatically updated based on the first location relationship, to implement automatic annotation of the first bounding box in an occlusion scenario. This improves annotation efficiency.

In a possible design, the at least two semantic objects further include a third semantic object. After the updated first bounding box of the first semantic object is obtained, the method further includes: if determining that the first sub-bounding box and/or the second sub-bounding box intersects a third bounding box of the third semantic object, updating the bounding box of the first semantic object again to obtain a first bounding box obtained after a second update, where the first bounding box obtained after the second update includes three sub-bounding boxes.

In this design, for a scenario in which the first bounding box is occluded by a plurality of semantic objects, a boundary can be automatically annotated. This effectively improves image annotation efficiency.

According to a second aspect, an embodiment of this application provides a recognition model training method. The method includes: first, obtaining a first image, where the first image includes at least two semantic objects, and the at least two semantic objects include a first semantic object and a second semantic object; second, determining a bounding box of a blank region in the first image based on a first bounding box of the first semantic object and a second bounding box of the second semantic object; then, generating a second image based on the first image, the second bounding box, the first bounding box, and the bounding box of the blank region; and finally, inputting the second image into a recognition model for training, to obtain a trained recognition model. The bounding box of the blank region and the first bounding box have a same third target directed line segment, and the bounding box of the blank region and the second bounding box have a same fourth target directed line segment.

In this embodiment of this application, the bounding box of the blank region can be determined by using a bounding box (for example, the first bounding box and the second bounding box) of an annotated semantic object in the first image, to effectively improve annotation efficiency of the blank region in the first image. This effectively improves efficiency of obtaining sample data, and achieves effect of optimizing precision of the recognition model.

According to a third aspect, an embodiment of this application provides a recognition model training method. The method includes: first, obtaining a first image, where the first image includes at least one semantic object, and the at least one semantic object includes a first semantic object; second, determining a bounding box of an isolation region in the first image based on a first bounding box of the first semantic object and a boundary of the first image; then, generating a second image based on the first image, the first bounding box, and the bounding box of the isolation region; and finally, inputting the second image into a recognition model for training, to obtain a trained recognition model. The isolation region may be understood as a region that does not intersect a bounding box of the at least one semantic object. The bounding box of the isolation region includes at least two sub-bounding boxes, any sub-bounding box in the at least two sub-bounding boxes and the first bounding box have a same third target directed line segment, and/or the any sub-bounding box in the at least two sub-bounding boxes and the second bounding box have a same fourth target directed line segment.

In this embodiment of this application, the bounding box of the blank region can be determined by using a bounding box of an annotated semantic object in the first image, to effectively improve annotation efficiency of the isolation region in the first image. This improves efficiency of obtaining sample data, and achieves effect of optimizing precision of the recognition model.

According to a fourth aspect, an embodiment of this application provides a recognition model training apparatus. For example, the apparatus may include:
an obtaining module, configured to obtain a first image, where the first image includes at least two semantic objects, and the at least two semantic objects include a first semantic object and a second semantic object; and
a processing module, configured to: update a bounding box of the first semantic object based on a first location relationship between a first bounding box of the first semantic object and a second bounding box of the second semantic object, to obtain an updated first bounding box of the first semantic object, where the first location relationship includes any one of external tangency, internal tangency, and intersection, and the updated first bounding box and the second bounding box have a same first target directed line segment; generate a second image based on the first image, the second bounding box, and the updated first bounding box; and input the second image into a recognition model for training, to obtain a trained recognition model.

In addition, for another optional implementation of the communication apparatus in this aspect, refer to related content of the first aspect. Details are not described herein again.

According to a fifth aspect, an embodiment of this application provides a recognition model training apparatus. For example, the apparatus may include:
an obtaining module, configured to obtain a first image, where the first image includes at least two semantic objects, and the at least two semantic objects include a first semantic object and a second semantic object; and
a processing module, configured to: determine a bounding box of a blank region in the first image based on a first bounding box of the first semantic object and a second bounding box of the second semantic object, where the bounding box of the blank region and the first bounding box have a same third target directed line segment, and the bounding box of the blank region and the second bounding box have a same fourth target directed line segment; generate a second image based on the first image, the second bounding box, the first bounding box, and the bounding box of the blank region; and input the second image into a recognition model for training, to obtain a trained recognition model.

In addition, for another optional implementation of the communication apparatus in this aspect, refer to related content of the second aspect. Details are not described herein again.

According to a sixth aspect, an embodiment of this application provides a recognition model training apparatus. For example, the apparatus may include:
an obtaining module, configured to obtain a first image, where the first image includes at least one semantic object, and the at least one semantic object includes a first semantic object; and
a processing module, configured to: determine a bounding box of an isolation region in the first image based on a first bounding box of the first semantic object and a boundary of the first image, where the isolation region is a region that does not intersect a bounding box of the at least one semantic object, the bounding box of the isolation region includes at least two bounding boxes, any bounding box in the at least two bounding boxes and the first bounding box have a same third target directed line segment, and/or the any bounding box in the at least two sub-bounding boxes and the second bounding box have a same fourth target directed line segment; generate a second image based on the first image, the first bounding box, and the bounding box of the isolation region; and input the second image into a recognition model for training, to obtain a trained recognition model.

In addition, for another optional implementation of the communication apparatus in this aspect, refer to related content of the third aspect. Details are not described herein again.

According to a seventh aspect, an embodiment of this application provides a vehicle. The vehicle may include a processor. The processor is configured to perform the method according to any one of the first aspect, the second aspect, or the third aspect, or the possible designs of the first aspect, the second aspect, or the third aspect.

According to an eighth aspect, an embodiment of this application provides a server. The server includes a processor, and the processor is configured to perform the method according to any one of the first aspect, the second aspect, or the third aspect, or the possible designs of the first aspect, the second aspect, or the third aspect.

In a possible design, the server is one server or a server cluster including a plurality of sub-servers. When the server is the server cluster including the plurality of sub-servers, the plurality of sub-servers jointly perform the method according to any one of the first aspect, the second aspect, or the third aspect, or the possible designs of the first aspect, the second aspect, or the third aspect.

According to a ninth aspect, an embodiment of this application provides a chip system. The chip system includes at least one processor. When program instructions are executed in the at least one processor, the method according to any one of the first aspect, the second aspect, or the third aspect, or the optional designs of the first aspect, the second aspect, or the third aspect can be implemented.

In a possible design, the chip system further includes a communication interface, and the communication interface is configured to input or output information.

In a possible design, the chip system further includes a memory. The memory is coupled to the processor through the communication interface, and is configured to store the instructions, so that the processor reads, by using the communication interface, the instructions stored in the memory.

In a possible design, the processor may be a processing circuit. This is not limited in this application.

According to a tenth aspect, an embodiment of this application further provides a computer program product including instructions. When the computer program product runs on the apparatus, the recognition model training method according to any one of the first aspect, the second aspect, or the third aspect, or the possible designs of the first aspect, the second aspect, or the third aspect is performed.

According to an eleventh aspect, an embodiment of this application provides a computer-readable storage medium. The computer-readable storage medium stores a computer program. When the computer program is run, the recognition model training method according to any one of the first aspect, the second aspect, or the third aspect, or the possible designs of the first aspect, the second aspect, or the third aspect is implemented.

For details of beneficial effect of the fourth aspect to the eleventh aspect, refer to technical effect that can be achieved by corresponding designs in the first aspect to the third aspect. Details are not described herein again.

### BRIEF DESCRIPTION OF DRAWINGS

FIG. 1 is a schematic diagram of a scenario according to this application;
FIG. 2 is a schematic diagram of image annotation according to this application;
FIG. 3 is a schematic diagram of deployment of a model training apparatus according to an embodiment of this application;
FIG. 4 is a schematic flowchart of a recognition model training method according to an embodiment of this application;
FIG. 5 is a schematic diagram of a possible scenario of a location relationship according to an embodiment of this application;
FIG. 6 is a schematic diagram of a scenario of intersection line segments according to an embodiment of this application;
FIG. 7 is a schematic diagram of a scenario of parallel line segments according to an embodiment of this application;
FIG. 8 is a schematic diagram of a scenario according to an embodiment of this application;
FIG. 9 is a schematic diagram of another scenario according to an embodiment of this application;
FIG. 10 is a schematic diagram of another scenario according to an embodiment of this application;
FIG. 11 is a schematic flowchart of a recognition model training method according to an embodiment of this application;
FIG. 12A is a schematic diagram of a scenario according to an embodiment of this application;
FIG. 12B is a schematic diagram of another scenario according to an embodiment of this application;
FIG. 13 is a schematic flowchart of a recognition model training method according to an embodiment of this application;
FIG. 14A is a schematic diagram of a scenario according to an embodiment of this application;
FIG. 14B is a schematic diagram of another scenario according to an embodiment of this application;
FIG. 15 is a schematic diagram of a structure of a recognition model training apparatus according to an embodiment of this application;
FIG. 16 is a schematic diagram of another structure of a recognition model training apparatus according to an embodiment of this application;
FIG. 17 is a schematic diagram of another structure of a recognition model training apparatus according to an embodiment of this application; and
FIG. 18 is a schematic diagram of a structure of an electronic device according to an embodiment of this application.

### DESCRIPTION OF EMBODIMENTS

The following describes some terms in embodiments of this application, to facilitate understanding of a person skilled in the art.
(1) A bounding box may be understood as a fictional outer box surrounding each semantic object in a to-be-annotated image, or an outer box of a specific image region in a to-be-annotated image. During processing of a digital image, the bounding box may be coordinates of a polygonal border that completely surrounds the digital image when the digital image is placed on a page, a canvas, a screen, or another similar two-dimensional background. The bounding box may be simply understood as that a complex semantic object is approximately represented by a geometric image with a simple characteristic.
(2) A blank region may be understood as an image region corresponding to a specific semantic object set in a to-be-annotated image in a specific application scenario, for example, an image region in which a road surface or a sky is located in an autonomous driving scenario.
(3) An isolation region may be understood as an image region isolated by one or more semantic objects in a to-be-annotated image in a specific application scenario, for example, an image region in which a road surface isolated by a green belt is located in an autonomous driving scenario.
(4) In embodiments of this application, "at least one" means one or more, and "at least two" means two or more. The term "and/or" describes an association relationship for describing associated objects and represents that three relationships may exist. For example, A and/or B may represent the following three cases: Only A exists, both A and B exist, and only B exists. A and B each may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one (one piece) of a, b, or c may indicate a, b, c, a and b, a and c, b and c, or a, b, and c, where a, b, and c may be singular or plural. In addition, unless otherwise stated, in embodiments of this application, ordinal numbers such as "first" and "second" are intended to distinguish between a plurality of objects, but are not intended to limit sizes, shapes, content, orders, time sequences, priorities, importance, or the like of the plurality of objects. For example, a first bounding box and a second bounding box are merely used to distinguish different bounding boxes, but do not indicate different sizes, shapes, priorities, or importance degrees of the two bounding boxes.

The foregoing describes some terms in embodiments of this application. The following describes technical features in embodiments of this application.

In recent years, deep learning has penetrated into all fields of machine vision (for example, autonomous driving, smart healthcare, and smart city). A deep learning-based recognition model may recognize a target object in different application scenarios, for example, recognize a boundary of the target object.

A recognition model obtained based on supervised deep learning (a process of training an intelligent algorithm based on known data and a label in a one-to-one correspondence with the data, and mapping input data to the label) provides the best recognition effect. However, the supervised deep learning needs to be trained with a large amount of annotated sample data, to obtain a recognition model with high accuracy. Therefore, it is very important to obtain a large amount of accurately annotated sample data.

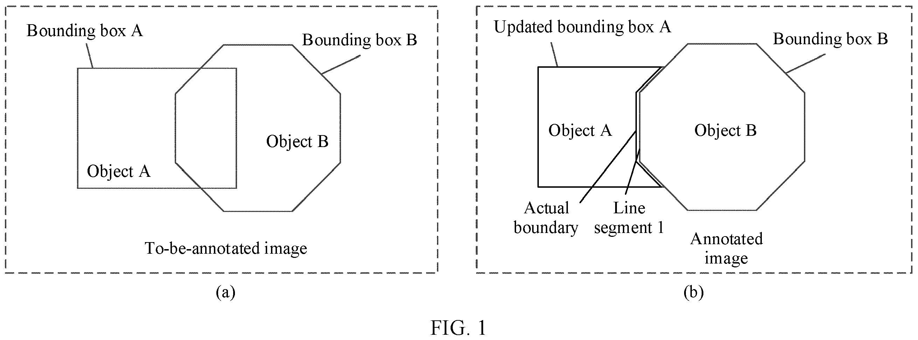

It can be learned from the foregoing descriptions that, most sample data corresponding to a recognition model in machine vision is image data. Because an existing recognition model cannot accurately recognize a boundary between different semantic objects in an image (for example, a boundary between a vehicle and a pedestrian), a boundary of a region in which a specific semantic object (for example, a road surface) is located in the image, and a boundary of a region that is formed through isolation by the specific semantic object and that is in the image, a large quantity of manual annotation is needed, resulting in low efficiency. For example, semantic objects in a to-be-annotated image shown in (a) in FIG. 1 include an object A, an object B, a bounding box A corresponding to the object A, and a bounding box B corresponding to the object B. The existing recognition model cannot accurately recognize a boundary between the bounding box A and the bounding box B, and the boundary needs to be obtained by manually annotation.

A boundary between the semantic objects in the to-be-annotated image is annotated in the following implementations. In an implementation, a pixel region corresponding to each semantic object in the to-be-annotated image is marked with a same color, and then boundary coordinates of the marked pixel region are calculated according to a preset algorithm, to obtain a bounding box of each semantic object and the boundary between the different semantic objects. However, according to this solution, when a pixel region of a semantic object (for example, a building) with rich details or an uneven boundary is depicted, a size of a brush needs to be continuously adjusted, which consumes a large period of time, and still cannot resolve low annotation efficiency.

In another implementation, a boundary of a semantic object in the to-be-annotated image is directly depicted manually by using a brush or a polygon drawing tool, to obtain a pixel region corresponding to each semantic object in the to-be-annotated image, then an annotated pixel in each pixel region is marked as 1, and a pixel region that is not annotated is marked with 0, and an image mask including 0 and 1 is generated for each pixel region. If a pixel in a pixel region corresponding to a current to-be-annotated semantic object in the to-be-annotated image has been marked as 1 by another semantic object, a location of the pixel is marked as 0. In this way, annotation of the boundary between the different semantic objects can be completed.

However, according to this solution, a boundary of the pixel region corresponding to each semantic object needs to be converted into a mask representation. If there are a large quantity of semantic objects in the to-be-annotated image and the semantic objects are small, a large quantity of redundant calculations are needed, which is very time-consuming and still cannot resolve low annotation efficiency. In addition, coordinates of a boundary of a pixel region obtained by using a brush or a drawing tool are coordinates with precise decimals, but a mask can process only integer coordinates. Therefore, annotation an image by using the mask causes a large precision error, and the boundary between the different semantic objects does not coincide with an actual boundary. As shown in (a) in FIG. 1, the semantic objects in the to-be-annotated image are the object A and the object B, and the bounding box A corresponding to the object A is occluded by the bounding box B corresponding to the object B. The boundary between the bounding box A and the bounding box B that is obtained by using the technical solution is a line segment 1 shown in (b) in FIG. 1. However, the line segment 1 does not coincide with the actual boundary.

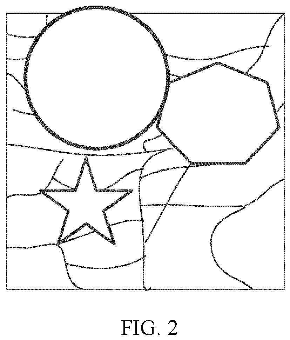

In another implementation, the to-be-annotated image is segmented into a plurality of superpixel blocks according to a preset algorithm (a small region including a series of adjacent pixels having similar color, brightness, and texture characteristics), and superpixel blocks having the same semantic information (for example, a color) are combined into one category. Then, category annotation is performed on the combined superpixel blocks one by one based on a user operation until a boundary of each semantic object in the to-be-annotated image (for example, a circle, a hexagon, a pentagon, and the like in FIG. 2), and the boundary between the different semantic objects (for example, a boundary between the circle and the hexagon in FIG. 2) are obtained. However, according to this solution, a precision requirement for a superpixel algorithm is very high. In addition, higher precision indicates a smaller superpixel block and a more complex operation, making it difficult to master merging granularity of a pixel block. If the merging granularity is excessive, some semantic objects with a small pixel region cannot be annotated, resulting in poor image annotation precision.

To resolve the foregoing technical problem, embodiments of this application provide a recognition model training method and apparatus, to automatically annotate a first image, so that annotated sample data with high precision can be obtained at low costs and high efficiency, and then a recognition model with high accuracy is obtained through training based on the sample data.

It should be understood that, in embodiments of this application, the first image is a preprocessed to-be-annotated image, and a complete bounding box of each semantic object in the first image has been annotated. According to the technical solution in this embodiment of this application, the boundary between the different semantic objects may be automatically annotated based on a first location relationship (for example, intersection or internal tangency) between the different semantic objects. This can effectively improve sample annotation efficiency.

It should be noted that the recognition model training method in embodiments of this application may be applied to any field of machine vision. The following are examples.

In the medical field, the to-be-annotated image may be a type of lesion image, for example, a fractured leg bone image of a patient with a leg fracture. According to the technical solutions of this embodiment of this application, a common boundary between semantic objects in the fractured leg bone image may be automatically annotated, to obtain an annotated image. Further, a recognition model is trained based on the annotated image, and recognizes a new fractured leg bone image, to obtain a clearer boundary between semantic objects in the fractured leg bone image. This effectively improves recognition accuracy of a fracture patient and reduces working pressure of manually distinguishing the fracture patient.

In the autonomous driving field, the to-be-annotated image may be an image of a vehicle running environment. According to the technical solution in this embodiment of this application, a boundary (for example, a boundary between a vehicle and a building), a blank region, and an isolation region between different semantic objects in the image of the vehicle running environment may be automatically annotated. In this way, an accurate annotated sample can be provided, and data annotation efficiency is effectively improved. In addition, a recognition model can be optimized and trained by using an annotated sample, to effectively improve accuracy of recognizing an object boundary by the vehicle in an autonomous driving process, and facilitate completion of autonomous driving.

The following uses the autonomous driving field as an example to describe a system architecture to which embodiments of this application are applicable.

In the autonomous driving field, the recognition model training method provided in embodiments of this application may be specifically applied to an internet of vehicles, for example, vehicle to everything (vehicle to everything, V2X), long term evolution to vehicle (long term evolution to vehicle, LTE-V), and vehicle to vehicle (vehicle to vehicle, V2V). For example, the recognition model training method may be applied to a vehicle with an image processing function, or applied to other components in a vehicle with an image processing function. The other components in the vehicle include but are not limited to: a vehicle-mounted terminal, a vehicle-mounted controller, an in-vehicle module, an automobile module, an in-vehicle component, an in-vehicle chip, an in-vehicle unit, a vehicle-mounted radar, or a vehicle-mounted camera. The vehicle may implement the recognition model training method provided in this application by using the vehicle-mounted terminal, the vehicle-mounted controller, the in-vehicle module, the automobile module, the in-vehicle component, the in-vehicle chip, the in-vehicle unit, the vehicle-mounted radar, or the vehicle-mounted camera.

Certainly, the recognition model training method in embodiments of this application may be further applied to another intelligent terminal with an image processing function other than a vehicle, disposed in another intelligent terminal with an image processing function other than a vehicle, or disposed in a component of the intelligent terminal. The intelligent terminal may be another terminal device like an intelligent transportation device, a smart home device, or a robot. The intelligent terminal includes but is not limited to an intelligent terminal or a controller in the intelligent terminal, a chip, another sensor like a radar or a camera, another component, and the like.

In the autonomous driving field, the recognition model training method provided in embodiments of this application may also be applied to an internet of vehicles server. The internet of vehicles server is a device with an image processing capability, for example, may be a physical device like a host or a server, or may be a virtual device like a virtual machine or a container. It should be noted that, for ease of description, the internet of vehicles server is referred to as a server below. In other words, in a specific implementation process, the "server" in the following may be a server in a common sense, another device with an image processing capability, or a module (for example, a chip or an integrated circuit) in the device.

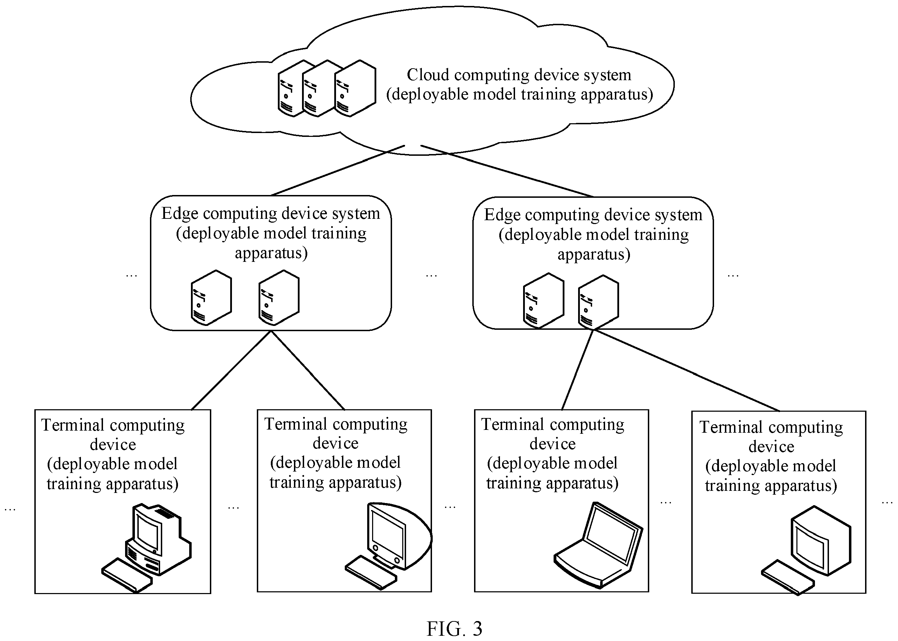

Specifically, the recognition model training method provided in embodiments of this application may be performed by a model training apparatus. A location at which the model training apparatus is deployed is not limited in embodiments of this application. For example, as shown in FIG. 3, the model training apparatus may run in a cloud computing device system (including at least one cloud computing device, for example, a vehicle server), an edge computing device system (including at least one edge computing device, for example, a server and a desktop computer), and various terminal computing devices, for example, the vehicle-mounted terminal, a notebook computer, and a personal desktop computer.

It should be noted that, for different image regions in the to-be-annotated image (for example, a region where the boundary between the different semantic objects is located, the blank region, and the isolation region), the model training apparatus provides different processing manners. Therefore, three image regions are used as examples to describe the recognition model training method in embodiments of this application with reference to the accompanying drawings, to clearly describe the recognition model training method provided in embodiments of this application.

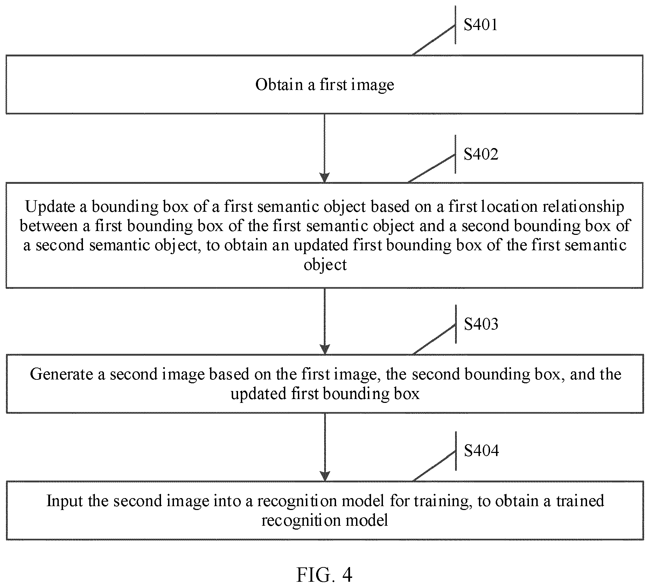

Refer to FIG. 4. An embodiment of this application provides a recognition model training method, to automatically annotate a region in which a boundary between different semantic objects is located in a to-be-annotated image. The method includes the following steps.

S401: Obtain a first image.

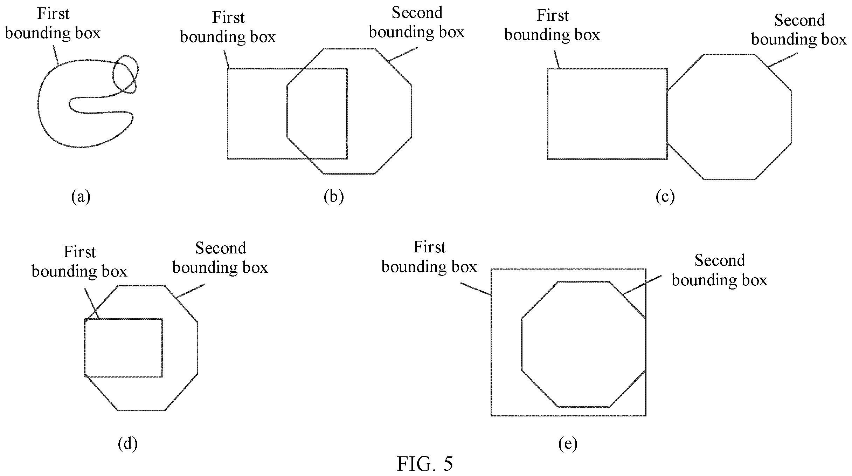

The first image includes at least two semantic objects, and the at least two semantic objects include a first semantic object and a second semantic object. The at least two semantic objects may be understood as that the first image includes image data corresponding to the at least two semantic objects, for example, a first bounding box of the first semantic object and a second bounding box of the second semantic object. It should be understood that the first image is the to-be-annotated image, and a complete bounding box of each semantic object in the first image is annotated, for example, a first bounding box of the first semantic object and a second bounding box of the second semantic object shown in (b) in FIG. 5.

A source of the first image is not limited in this embodiment of this application. The first image may be specifically obtained by processing real data, or may be obtained by using virtual data. The real data may be understood as an image in an actual environment, and the virtual data may be understood as image data obtained by using a preset rule.

The following separately describes processing manners of the real data and the virtual data.

### 1. Real data

In a possible implementation, a third image (namely, the real data) may be obtained, the third image is preprocessed according to a preset algorithm (a target detection algorithm) to obtain an approximate contour of each semantic object in the third image, then the contour of each semantic object is manually corrected, and a complete bounding box corresponding to each semantic object is annotated, to obtain the first image. In this way, accuracy of the first image can be ensured, so that an annotated image subsequently obtained is more accurate.

There are a plurality of manners of obtaining the third image, including but not limited to the following manners:
Manner 1: A vehicle driving environment image shot by a vehicle-mounted camera of a vehicle is used as the third image. This can effectively reduce labor costs for obtaining the third image.
Manner 2: A point cloud of a plurality of objects (for example, a road surface, a vehicle, and a pedestrian) in a vehicle running environment is obtained by using a radar disposed on a vehicle, clustering processing and envelope processing are performed on the point cloud, and a processed point cloud is projected onto a two-dimensional plane, to obtain the third image. This reduces labor costs for obtaining the third image, retains a feature closer to an actual environment in the third image, and can improve accuracy of the third image.
Manner 3: A vehicle driving environment image downloaded from a network or a vehicle driving environment image shot by a worker is used as the third image. This can reduce hardware costs.

It should be understood that the foregoing several manners may be used together or separately. This is not limited in this embodiment of this application.

### 2. Virtual data

In a possible implementation, a bounding box of at least one semantic object (for example, a vehicle, a pedestrian, or a green belt) may be obtained from a cloud device or a local server, and random combination is performed on the bounding box of the at least one semantic object to obtain the first image (namely, the virtual data). In this way, a real vehicle driving environment image does not need to be shot, and a vehicle driving environment image does not need to be preprocessed. This helps save labor and material costs, quickly obtain the first image, and effectively improve efficiency of subsequently obtaining an annotated sample.

It should be understood that, "random combination" means that bounding boxes of different semantic objects are put together. A location relationship between semantic objects in an image generated by performing "random combination" is not specifically limited in this embodiment of this application. For example, a vehicle driving environment image including a vehicle bounding box, a pedestrian bounding box, and a green belt bounding box may be obtained by performing random combination on complete bounding boxes respectively corresponding to the vehicle, the pedestrian, and the green belt as common road objects in a vehicle driving environment. In the image, the vehicle bounding box may be tangent to the green belt bounding box and separated from the pedestrian bounding box; or the vehicle bounding box may intersect the green belt bounding box and be tangent to the pedestrian bounding box. In the image, the vehicle bounding box may intersect both the green belt bounding box and the pedestrian bounding box. Specifically, refer to FIG. 5. The first bounding box of the first semantic obj ect and the second bounding box of the second semantic object are used as an example. The first bounding box and the second bounding box shown in (b) to (e) in FIG. 5 may be obtained by performing random combination on the first bounding box and the second bounding box, to form the first image.

It should be understood that the foregoing two manners of obtaining the first image may be implemented separately, or may be implemented in combination with each other.

S402: Update a bounding box of the first semantic object based on a first location relationship between the first bounding box of the first semantic object and the second bounding box of the second semantic object, to obtain an updated first bounding box of the first semantic object.

It should be noted that each semantic object in the first image may be self-occluded. For example, refer to FIG. 5. Self-occlusion (one part of an object itself occludes another part of the object, making the occluded part of the object invisible) occurs in the first bounding box of the first semantic object shown in (a) in FIG. 5. For the first bounding box that is self-occluded, conversion processing is performed on a self-occluded part to obtain a first bounding box that is not self-occluded, and then subsequent update processing is performed. This effectively improves accuracy of the first bounding box obtained through subsequent updating.

In this embodiment of this application, the first location relationship may specifically include one or more of external tangency, internal tangency, and intersection. That the first location relationship is tangency means that the first semantic obj ect may be internally tangent to the second semantic obj ect, or the second semantic obj ect may be internally tangent to the first semantic obj ect. This is not limited in this application.

For example, continue to refer to FIG. 5. As shown in (b) in FIG. 5, when the first location relationship is intersection, the first bounding box intersects the second bounding box. As shown in (c) in FIG. 5, when the first location relationship is external tangency, the first bounding box is externally tangent to the second bounding box. As shown in (d) in FIG. 5, when the first location relationship is internal tangency, the first bounding box is internally tangent to the second bounding box, or as shown in (e) in FIG. 5, the second bounding box is internally tangent to the first bounding box. It should be noted that, in this embodiment of this application, update processing may be performed on the first bounding box when the first bounding box and the second bounding box have an internal tangency relationship shown in (e) in FIG. 5; or update processing may be performed on the second bounding box when the first bounding box and the second bounding box have an internal tangency relationship shown in (d) in FIG. 5.

It should be understood that, in this embodiment of this application, an updated first bounding box and an updated second bounding box have a same first target directed line segment, and "the first target directed line segment" may be understood as a same boundary line segment in the updated first bounding box and the updated second bounding box.

In a possible implementation, a bounding box that needs to be updated in the first image may be preset as the first bounding box, and then a bounding box of a semantic object with complete boundary annotation is randomly determined from the first image as the second bounding box, and then the first bounding box is updated based on a location relationship between the first bounding box and the second bounding box. This implementation can improve image processing efficiency.

In another possible implementation, based on a user operation, it may be determined that a bounding box that needs to be updated in the first image is the first bounding box, and a second bounding box for updating the first bounding box may be determined, to determine a layer on which the first bounding box is located.

For example, before the bounding box of the first semantic object is updated, a first operation is received. Based on the first operation, the first bounding box is determined as a first layer, and the second bounding box is determined as a second layer. The first target directed line segment is located on the second layer. The first layer is located below the second layer. The "first layer" is a layer in which a target semantic object (namely, the first semantic object) whose bounding box needs to be updated in the first image is located. The "second layer" is a layer in which a semantic object (namely, the second semantic object) whose boundary is shared in the first image is located. The "first operation" is an operation performed by a user, for example, an operation performed by a user detected on a user interface provided by a data annotation platform when the technical solution provided in this embodiment of this application is applied to the data annotation platform, specifically an operation of inputting a first semantic object identifier and a second semantic object identifier, or an operation of clicking a first semantic object identifier by the user. This is not specifically limited in this embodiment of this application.

A second image obtained based on this implementation may better meet a user requirement.

In a possible implementation, a process of updating the bounding box of the first semantic object based on the first location relationship between the first bounding box of the first semantic object and the second bounding box of the second semantic object may include the following process of steps 1 to 4:
Step 1: Determine at least two intersection points between the first bounding box and the second bounding box.

It should be noted that division of the first bounding box and the second bounding box into line segments in step 2 depends on an intersection point between the two bounding boxes. Therefore, accuracy of the intersection point determines accuracy of division of a bounding box into line segments, and further determines accuracy of the updated first bounding box. Therefore, it is particularly important to determine an appropriate intersection point. One manner of determining the intersection point is: calculating an intersection point between the first bounding box and the second bounding box according to a preset geometric algorithm. Because coordinates of the calculated intersection point are irrational numbers and have a specific deviation from an actual location, the intersection point needs to be flexibly determined, to ensure the accuracy of the intersection point.

It should be understood that the intersection point between the two bounding boxes is an intersection point between directed line segments of the two bounding boxes. Because there are different location relationships between directed line segments of bounding boxes of different semantic objects, for example, intersection line segments and parallel line segments, manners of determining an intersection point between two line segments are different.

The following describes, with reference to a specific example, a manner of determining an intersection point between line segments based on the different location relationships.

A. For the intersection line segments, it is determined that any first directed line segment of the first bounding box is not parallel to any second directed line segment of the second bounding box, and there is a first intersection point between the any first directed line segment and the any second directed line segment. Because an end point of each directed line segment is a start point of a next line segment, if the first intersection point is an end point of a directed line segment, the intersection point is not considered as an intersection point, to prevent an intersection point from being determined repeatedly. Therefore, when it is determined that the first intersection point is on the any first directed line segment and the any second directed line segment, and the first intersection point is not an end point of the any first directed line segment or an end point of the any second directed line segment, the first intersection point is determined as any intersection point in the at least two intersection points. This can effectively prevent an intersection point between the first bounding box and the second bounding box from being determined repeatedly.

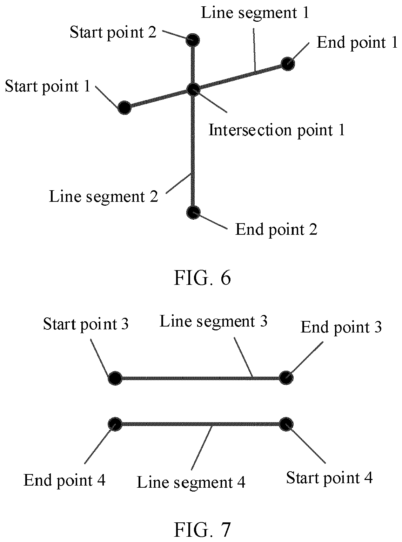

For example, refer to FIG. 6. The any first directed line segment is a line segment 1, the any second directed line segment is a line segment 2, the line segment 1 intersects the line segment 2, the line segment 1 includes a start point 1 and an end point 1, the line segment 2 includes a start point 2 and an end point 2, the line segment 1 and the line segment 2 have an intersection point 1, and the intersection point 1 is not the end point 1 and the end point 2. In this case, the intersection point 1 is determined as the intersection point between the first bounding box and the second bounding box.

Further, because coordinate values of the intersection point 1 are irrational numbers, in actual coordinates, the intersection point 1 may not be located on the line segment 1 or the line segment 2. Therefore, when a distance between the intersection point 1 and the line segment 1 is less than a first threshold, it is considered that the intersection point 1 is located on the line segment 1; or when a distance between the intersection point 1 and the line segment 2 is less than a second threshold, it is considered that the intersection point 1 is located on the line segment 2. In this way, flexibility of setting the intersection point is effectively improved, so that the intersection point is determined more accurately, and a line segment obtained through division based on a fact that the intersection point is on the first bounding box or the second bounding box is more accurate.

In a possible implementation, there may be two intersection points between the line segment 1 and the line segment 2, for example, the intersection point 1 and an intersection point 2. When a distance between the intersection point 1 and the intersection point 2 is less than a third threshold, the intersection point 1 and the intersection point 2 may be considered as a same intersection point. In this way, flexibility of setting the intersection point can be further improved, so that the first bounding box and the second bounding box are subsequently split into line segments in fewer cases. This effectively improves efficiency of updating the bounding box.

B. For the parallel line segments, if it is determined that any first directed line segment of the first bounding box is parallel and coincident with any second directed line segment of the second bounding box, a start point of the any first directed line segment or the any second directed line segment is determined as the intersection point between the first bounding box and the second bounding box. In this way, flexible setting of the intersection point can reduce a subsequent line segment division operation, and therefore improve efficiency of updating the first bounding box.

Optionally, when a second start point of the any second directed line segment is on the any first directed line segment, the second start point is determined as the intersection point of the first bounding box and the second bounding box; or when a first start point of the any first directed line segment is on the any second directed line segment, the first start point is determined as the intersection point between the first bounding box and the second bounding box. This can further improve accuracy of an intersection point between the determined coincident line segments.

For example, refer to FIG. 7. The any first directed line segment is a line segment 3 in FIG. 7, the any second directed line segment is a line segment 4 in FIG. 7, the line segment 3 includes a start point 3, and the line segment 4 includes a start point 4. After it is determined that the line segment 3 coincides with the line segment 4, and the start point 3 is located on the line segment 4, the start point 3 is determined as the intersection point between the first bounding box and the second bounding box. If it is determined that the start point 4 is on the line segment 3, the start point 4 is determined as the intersection point between the first bounding box and the second bounding box. Specifically, a specific manner of determining whether the start point 3 is located on the line segment 4 is similar to a specific process of determining whether the intersection point 1 is located on the line segment 1. Details are not described herein again.

There are a plurality of manners of determining whether the any first directed line segment coincides with the any second directed line segment, including but not limited to the following manners:
Manner 1: The any first directed line segment includes the first start point and a first end point, and the any second directed line segment includes the second start point and a second end point. If it is determined that a distance between the first start point or the first end point and the any second directed line segment is less than a fourth threshold, it is determined that the any first directed line segment coincides with the any second directed line segment.

For example, refer to FIG. 7. The any first directed line segment is the line segment 3 in FIG. 7, and the any second directed line segment is the line segment 4 in FIG. 7. It is assumed that the fourth threshold is 0.02 cm, the line segment 3 and the line segment 4 are parallel line segments, the line segment 3 includes the start point 3 and an end point 3, and the line segment 4 includes the start point 4 and an end point 4. If a distance between the start point 3 and/or the end point 3 and the line segment 4 is less than 0.02 cm, it is determined that the line segment 3 coincides with the line segment 4.

Manner 2: The any first directed line segment includes the first start point and a first end point, and the any second directed line segment includes the second start point and a second end point. If it is determined that a distance between the second start point or the second end point and the any first directed line segment is less than a fifth threshold, it is determined that the any first directed line segment coincides with the any second directed line segment.

For example, continue to refer to FIG. 7. The any first directed line segment is the line segment 3 in FIG. 7, and the any second directed line segment is the line segment 4 in FIG. 7. It is assumed that the fifth threshold is 0.03 cm, the line segment 3 and the line segment 4 are parallel line segments, the line segment 3 includes the start point 3 and an end point 3, and the line segment 4 includes the start point 4 and an end point 4. If a distance between the start point 4 and/or the end point 4 and the line segment 3 is less than 0.03 cm, it is determined that the line segment 3 coincides with the line segment 4.

Manner 3: The any first directed line segment includes the first start point and a first end point, and the any second directed line segment includes the second start point and a second end point. If it is determined that a distance between the any first directed line segment and the any second directed line segment is less than a sixth threshold, it is determined that the any first directed line segment coincides with the any second directed line segment. The distance between the any first directed line segment and the any second directed line segment may be obtained by performing geometric calculation on a first distance between the first start point and the second end point and a second distance between the first end point and the second start point.

For example, continue to refer to FIG. 7. The any first directed line segment is the line segment 3 in FIG. 7, and the any second directed line segment is the line segment 4 in FIG. 7. It is assumed that the sixth threshold is 0.01 cm, the line segment 3 and the line segment 4 are parallel line segments, the line segment 3 includes the start point 3 and the end point 3, and the line segment 4 includes the start point 4 and the end point 4. A distance between the start point 3 and the end point 4 is a distance 1, and a distance between the end point 3 and the start point 4 is a distance 2. It is determined, by using the distance 1 and the distance 2, that a distance between the line segment 3 and the line segment 4 is 0.005, which is less than the sixth threshold. Therefore, it is determined that the line segment 3 coincides with the line segment 4.

In the manner 1 to the manner 3, coordinate values of each point on the any first directed line segment and the any second directed line segment are irrational numbers. In view of this, it is determined in an approximate manner whether the any first directed line segment coincides with the any second directed line segment. A coincident line segment is flexibly determined, so that an intersection point determined based on the coincident line segment is more accurate.

It should be understood that specific values of the first threshold, the second threshold, the third threshold, the fourth threshold, the fifth threshold, and the sixth threshold may be the same or different. This is not specifically limited in this embodiment of this application. The foregoing specific implementation of determining an intersection point between the parallel line segments and an intersection point between the intersection line segments is implemented separately, or may be implemented in combination with each other.

Step 2: Split the first bounding box into at least two first directed line segments, and split the second bounding box into at least two second directed line segments based on the at least two intersection points. The first directed line segment and the second directed line segment that are obtained by splitting each include a start point and an end point. A "directed line segment" is briefly referred to as a "line segment" below. All line segments in this embodiment of this application are "directed line segments".

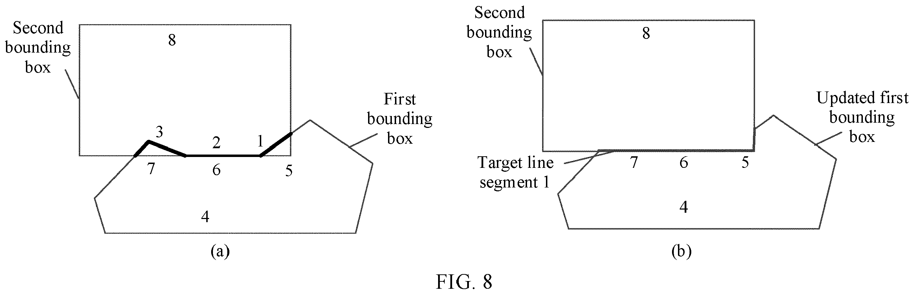

For example, as shown in (a) in FIG. 8, there are four intersection points between the first bounding box and the second bounding box. Based on the four intersection points, the first bounding box may be divided into the line segment 1, the line segment 2, the line segment 3, and the line segment 4; and the second bounding box is divided into a line segment 5, a line segment 6, a line segment 7, and a line segment 8.

Step 3: Determine, based on the first location relationship (for example, intersection or tangency), a first directed line segment located outside the second bounding box and a second directed line segment located inside the first bounding box.

Further, a first directed line segment located inside the second bounding box and a second directed line segment located outside the first bounding box may be determined based on the first location relationship.

Optionally, the at least two second directed line segments include a second directed line segment located on the first bounding box, and the second directed line segment is determined as a second directed line segment located inside the first bounding box. Correspondingly, the at least two first directed line segments include a first directed line segment located on the second bounding box, and the first directed line segment is determined as the first directed line segment located inside the second bounding box. In this way, a relationship between a line segment and a bounding box can be flexibly determined.

For example, as shown in (a) in FIG. 8, the first bounding box intersects the second bounding box, the first bounding box includes the line segment 1, the line segment 2, the line segment 3, and the line segment 4, and the second bounding box includes the line segment 5, the line segment 6, the line segment 7, and the line segment 8. If the line segment 1 and the line segment 3 are located inside the second bounding box, the line segment 1 and the line segment 3 are determined as line segments located inside the second bounding box. If the line segment 4 is located outside the second bounding box, the line segment 4 is determined as a line segment located outside the second bounding box. If the line segment 5 and the line segment 7 are located inside the first bounding box, the line segment 5 and the line segment 7 are determined as line segments located inside the first bounding box. If the line segment 8 is located outside the first bounding box, the line segment 8 is determined as a line segment located outside the first bounding box. If the line segment 2 is on the second bounding box, the line segment 2 is determined as a line segment located inside the second bounding box. If the line segment 6 is on the first bounding box, the line segment 6 is determined as a line segment located inside the first bounding box.

Step 4: Determine the updated first bounding box based on the first directed line segment located outside the second bounding box and the second directed line segment located inside the first bounding box.

In a possible implementation, the first directed line segment located outside the second bounding box and the second directed line segment located inside the first bounding box are connected, to obtain the updated first bounding box. This achieves automatic annotation of the first bounding box, to further improve annotation efficiency of the first image.

Further, the first directed line segment located inside the second bounding box may be deleted, and all second directed line segments of the second bounding box remain unchanged.

With reference to an example shown in FIG. 8, as shown in (a) in FIG. 8, the line segment 1, the line segment 2, and the line segment 3 of the first bounding box are located inside the second bounding box, and the line segment 4 is located outside the second bounding box. The line segment 5, the line segment 6, and the line segment 7 of the second bounding box are located inside the first bounding box, and the line segment 8 is located outside the first bounding box. The line segment 1, the line segment 2, and the line segment 3 are deleted, and the line segment 5, the line segment 6, the line segment 7, and the line segment 4 are connected, to obtain an updated first bounding box shown in (b) in FIG. 8. The second bounding box remains unchanged.

S403: Generate the second image based on the first image, the second bounding box, and the updated first bounding box.

It should be understood that the second image has a boundary mark, and the boundary mark may indicate that the updated first bounding box and the updated second bounding box have a same first target directed line segment. The first target line segment is a common boundary line segment of the first bounding box and the second bounding box (for example, a target line segment 1 shown in (b) in FIG. 8).

S404: Input the second image into a recognition model for training, to obtain a trained recognition model.

For example, several second images are used as an input of the recognition model, and a boundary mark corresponding to the second image is used as an output of the recognition model. The recognition model is trained, and a recognition model obtained by training may be configured to automatically recognize a boundary between different semantic objects in the image. For example, after a to-be-recognized real road surface environment image is input to the recognition model, the recognition model may output a common boundary between a vehicle and a pedestrian that is formed based on the first location relationship and that is in the environment image, without manual annotation.

It can be learned based on the foregoing descriptions that, in this embodiment of this application, boundary information between different semantic objects whose complete bounding boxes have been annotated can be automatically annotated. This effectively improves annotation efficiency of a to-be-annotated image, implements effect of obtaining annotated sample data at low costs and high efficiency, and further optimizes precision and effectiveness of the recognition model.

It should be understood that a quantity of semantic objects in the first image is not specifically limited in this embodiment of this application. The foregoing description that the first image includes the first semantic object and the second semantic object is merely an example instead of a limitation.

With reference to a specific embodiment, the following describes a case in which the first image includes a plurality of semantic objects.

It should be noted that, when the first image includes the plurality of semantic objects, after the first bounding box is updated based on a location relationship between the first bounding box and the second bounding box, a location relationship between the updated first bounding box and a bounding box of another semantic object in the first image may change. Therefore, the bounding box of the first semantic object needs to be updated again based on an actual situation. If location relationships between the first semantic object and the another semantic object are different, a process of updating the bounding box of the first semantic object again is also different.

In a possible embodiment, the first image further includes a third semantic object in addition to the first semantic object and the second semantic object. Before the first bounding box of the first semantic object is updated, the first bounding box includes a third bounding box of the third semantic object. If the updated first bounding box is internally tangent to the third bounding box, the bounding box of the first semantic object is updated again, to obtain a first bounding box that is obtained after a second update and that is the first semantic object. A fourth image is generated based on the first image, the second bounding box, the third bounding box, and the first bounding box obtained after the second update. The trained recognition model is retrained based on the fourth image, to obtain a new recognition model. The third bounding box and the first bounding box obtained after the second update have a same second target directed line segment. This can improve boundary annotation precision of semantic objects having a plurality of location relationships, and effectively improve sample annotation accuracy, to achieve effect of optimizing the recognition model.

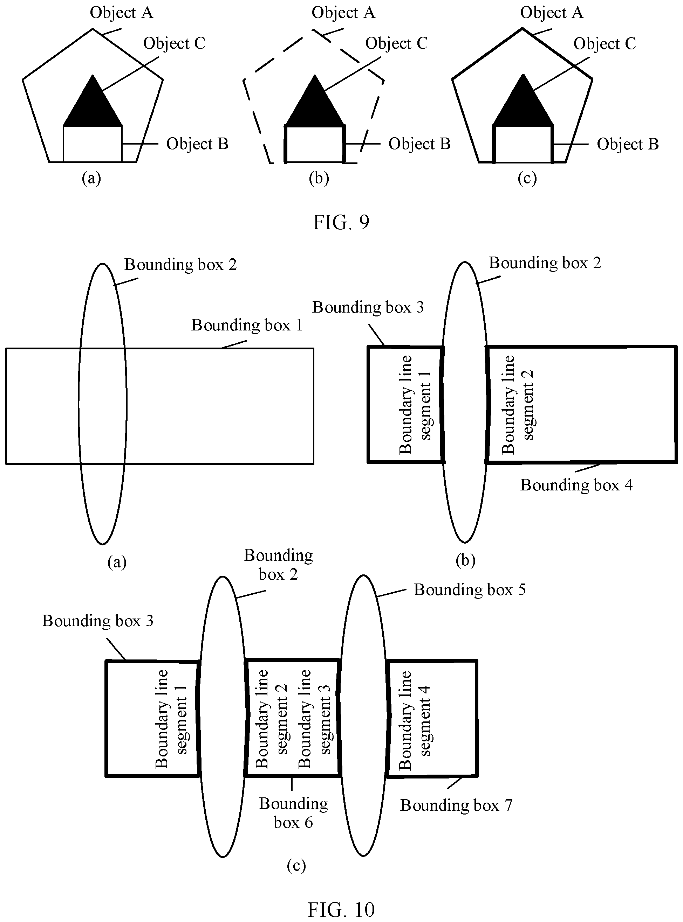

For example, as shown in (a) in FIG. 9, the first semantic object is an object A, the second semantic object is an object B, and the third semantic object is an object C. A bounding box of the object A is internally tangent to a bounding box of the object B, and the bounding box of object B is externally tangent to a bounding box of object C.

After a first update is performed on the bounding box of the object A, an updated bounding box of the object A is obtained, which is a dashed box shown in (b) in FIG. 9. The updated bounding box of the object A and the bounding box of the object B have a second target directed line segment (namely, a bold line segment shown in (b) in FIG. 9). It can be learned from (b) in FIG. 9 that a location relationship between the bounding box that is obtained after the first update and that is of the object A and the bounding box of the object C becomes internal tangency. Therefore, the updated bounding box of the object A needs to be updated again. After the updated bounding box of the object A is updated again, a bounding box that is obtained after a second update and that is of the object A shown in (c) in FIG. 9 may be obtained. The bounding box that is obtained after the second update and that is of the object A and the bounding box of the object C have a same third target directed line segment (namely, a bold line segment in the bounding box of the object C in (c) in FIG. 9). Further, the fourth image may be generated based on the bounding box of the object A obtained after the second update, the bounding box of the object B, and the bounding box of the object C, and the trained recognition model is re-trained based on the fourth image, to obtain the new recognition model.

In a possible embodiment, when the first location relationship between the first bounding box of the first semantic object and the second bounding box of the second semantic object is intersection, there is a special case of the first bounding box that is obtained after the first update and that is of the first semantic object in S402. That is, the first bounding box is truncated by the second bounding box, and the updated first bounding box is divided into two bounding boxes, for example, a first sub-bounding box and a second sub-bounding box. The second bounding box and each of the first sub-bounding box and the second sub-bounding box have a common boundary line segment. "Truncated" may be understood as that the first bounding box is occluded by the second bounding box. In this way, the first bounding box can be automatically updated based on the first location relationship. This implements automatic annotation of the first bounding box in an occlusion scenario, and improves annotation efficiency.

For example, refer to FIG. 10. In (a) in FIG. 10, the first bounding box is a bounding box 1, and the second bounding box is a bounding box 2. The bounding box 1 intersects the bounding box 2, and the bounding box 1 is truncated by the bounding box 2. The bounding box 1 is updated to obtain a bounding box 3 and a bounding box 4 shown in (b) in FIG. 10 (that is, an updated bounding box 1 is divided into the bounding box 3 and the bounding box 4). The bounding box 3 and the bounding box 2 have a common boundary line segment 1, and the bounding box 4 and the bounding box 2 have a common boundary line segment 2.

Further, if the first image further includes the third semantic object, the first bounding box may be truncated by the third bounding box of the third semantic object in addition to being truncated by the second bounding box. The first update is performed on the first bounding box to obtain the first sub-bounding box and the second sub-bounding box. If the first sub-bounding box and/or the second sub-bounding box are truncated by the third bounding box, the bounding box of the first semantic object is updated again to obtain at least three sub-bounding boxes.

For example, continue to refer to (c) in FIG. 10. The third semantic object corresponds to a bounding box 5. The bounding box 4 obtained after the first update is performed on the first bounding box is truncated by the bounding box 5. The first bounding box is updated again. A first bounding box obtained after a second update includes the bounding box 3, a bounding box 6, and a bounding box 7. The bounding box 6 and the bounding box 5 have a same boundary line segment 3 (namely, a bold segment in the bounding box 5). The bounding box 7 and the boundary 5 have a same boundary line segment 4 (namely, a bold segment in the bounding box 5).

It should be understood that, in an actual application scenario, the first bounding box may alternatively be truncated by bounding boxes of the plurality of semantic objects. The foregoing is merely an example in which the first bounding box is truncated by a bounding box of one semantic object or two semantic objects, and does not constitute a limitation on this embodiment of this application. In a specific example, the first semantic object may be a vehicle, and the second semantic object and the third semantic object may be branches. In other words, the foregoing technical solution may be applied to an application scenario in which the vehicle is occluded by the branch.

In this embodiment, a bounding box between the different semantic objects may be automatically annotated, to effectively resolve a problem that a common boundary between the different semantic objects due to an occlusion condition needs to be repeatedly drawn. This effectively improves annotation efficiency in the first image.

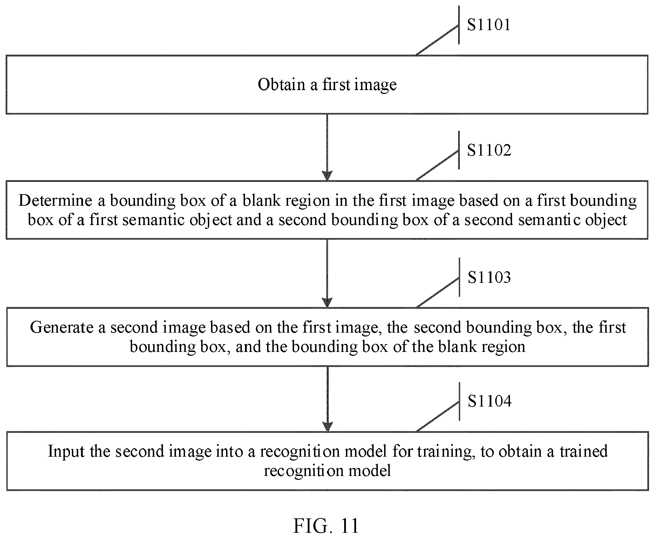

Refer to FIG. 11. An embodiment of this application provides another recognition model training method, to automatically annotate a blank region in a to-be-annotated image. The method specifically includes the following steps.

S1 101: Obtain a first image. The first image includes at least two semantic obj ects, and the at least two semantic objects include a first semantic object and a second semantic object.

Specifically, for specific descriptions of S1101, refer to the descriptions of S401. Details are not described herein again.

S1102: Determine a bounding box of a blank region in the first image based on a first bounding box of the first semantic object and a second bounding box of the second semantic object.

Specifically, the bounding box of the blank region determined in S1102 and the first bounding box have a same third target directed line segment, and the bounding box of the blank region and the second bounding box have a same fourth target directed line segment. "The third target directed line segment" is a common boundary line segment between the bounding box of the blank region and the first bounding box, for example, a common boundary line segment between a road surface and a respective bounding box of a vehicle. "The fourth target directed line segment" is a common boundary line segment between the bounding box of the blank region and the second bounding box, for example, a common boundary line segment between a bounding box of a road surface and a green belt.

There are a plurality of manners of determining the bounding box of the blank region based on the first bounding box and the second bounding box.

In a possible implementation, the first bounding box is split into at least one first directed line segment, and the second bounding box is split into at least one second directed line segment. Apart of the first directed line segment of the first bounding box and a part of the second directed line segment of the second bounding box form the blank region, and then the part of the first directed line segment and the part of the second directed line segment may be connected, to obtain the bounding box of the blank region.

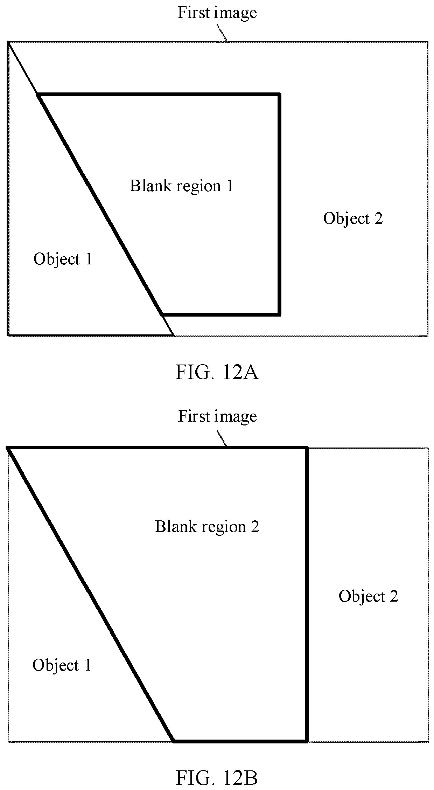

For example, refer to FIG. 12A. The first bounding box is a bounding box of an object 1, and the second bounding box is a bounding box of an object 2. Some line segments of the bounding box of the object 1 and some line segments of the bounding box of the object 2 (namely, bold line segments in FIG. 12A) form a blank region 1. A bounding box of the blank region 1, namely, a bounding box formed by the bold line segments in FIG. 12A may be obtained by obtaining information about these line segments and automatically connecting these line segments.

In another possible implementation, the first bounding box is split into at least one first directed line segment, and the second bounding box is split into at least one second directed line segment. If a part of the first directed line segment of the first bounding box, a part of the second directed line segment of the second bounding box, and a boundary of the first image form the blank region, boundary information of the first image is obtained. Then, the first directed line segment, the second directed line segment, and the boundary of the first image are connected, to obtain the bounding box of the blank region.

For example, refer to FIG. 12B. The first bounding box is a bounding box of an object 1, and the second bounding box is a bounding box of an object 2. Some line segments of the bounding box of the object 1, some line segments of the bounding box of the object 2, and some boundary line segments of the first image (namely, bold line segments in FIG. 12A) form a blank region 2. A bounding box of the blank region 2, namely, a bounding box formed by the bold line segments in FIG. 12B may be obtained by obtaining specific information of these line segments and automatically connecting these line segments.

A process of splitting the first bounding box into line segments may specifically be splitting the first bounding box into the line segments based on an intersection point between the first bounding box and a boundary line segment of the first image. A process of splitting the second bounding box into line segments may be specifically splitting the second bounding box into the line segments based on an intersection point between the second bounding box and the boundary line segment of the first image. A specific implementation of determining the intersection point is similar to the foregoing specific implementation of determining the intersection point between the first bounding box and the second bounding box. For details, refer to the foregoing descriptions. Details are not described herein again.

S1103: Generate a second image based on the first image, the second bounding box, the first bounding box, and the bounding box of the blank region.

It should be understood that the second image has a boundary mark, and the boundary mark indicates the bounding box of the blank region (for example, the bounding box of the blank region 1 shown in FIG. 12A).

S1104: Input the second image into a recognition model for training, to obtain a trained recognition model.

In a possible implementation, after the recognition model is obtained through optimization training of the second image, a new image is input into the recognition model. The recognition model may output information about a bounding box of a blank region in the image, and a boundary of the blank region does not need to be manually annotated.

In this embodiment of this application, the bounding box of the blank region can be determined by using a bounding box (for example, the first bounding box and the second bounding box) of an annotated semantic object in the first image, to effectively improve annotation efficiency of the blank region in the first image. This effectively improves efficiency of obtaining sample data, and achieves effect of optimizing precision of the recognition model. With reference to an autonomous driving scenario, the recognition model can automatically recognize a blank region in which the road surface is located, to facilitate vehicle route planning and better complete autonomous driving.

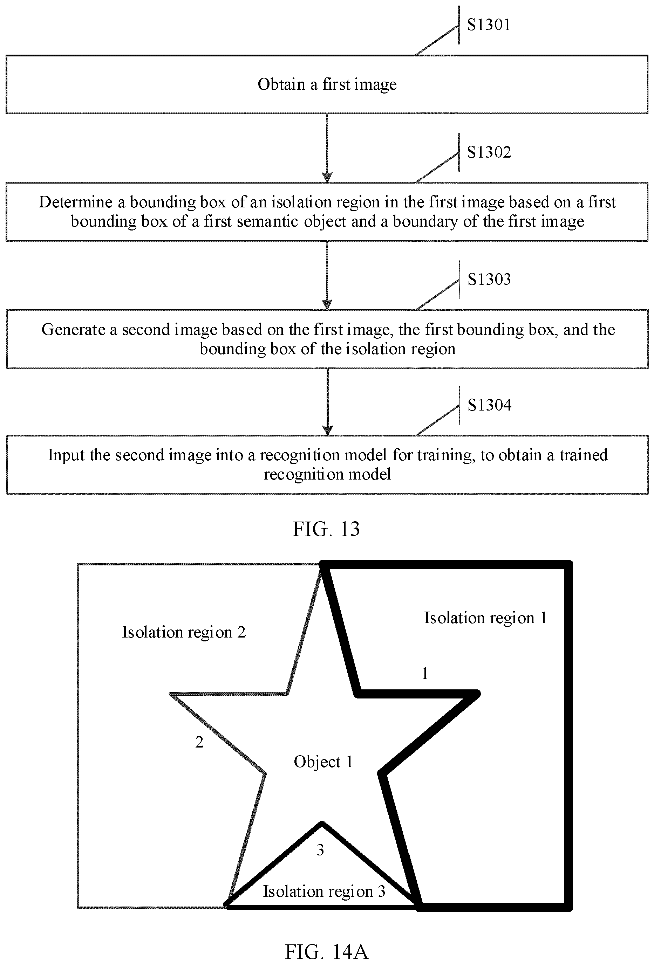

Refer to FIG. 13. An embodiment of this application provides another recognition model training method, to automatically annotate an isolation region in a to-be-annotated image. The method specifically includes the following steps.

S1301: Obtain a first image. The first image includes at least one semantic object, and the at least one semantic object includes a first semantic object.

Specifically, for specific descriptions of S1301, refer to the descriptions of S401. Details are not described herein again.

It should be understood that a complete bounding box of each semantic object in the first image, for example, a first bounding box of the first semantic object, is annotated.

S1302: Determine a bounding box of an isolation region in the first image based on the first bounding box of the first semantic object and a boundary of the first image.

Specifically, the bounding box of the isolation region includes at least two bounding boxes, and any bounding box in the at least two bounding boxes and the first bounding box have a same third target directed line segment, that is, the any bounding box and the first bounding box have a same boundary line segment.

For example, as shown in FIG. 14A, the first bounding box is a bounding box of an object 1. The first image is isolated by the bounding box of the object 1, to obtain an isolation region 1, an isolation region 2, and an isolation region 3. A bounding box of the isolation region 1 and the bounding box of the object 1 have a same boundary line segment 1 (namely, the thickest line segment of the bounding box of the object 1), a bounding box of the isolation region 2 and the bounding box of the object 1 have a same boundary line segment 2 (namely, the thinnest line segment of the bounding box of the object 1), and a bounding box of the isolation region 3 and the bounding box of the object 1 have a same boundary line segment 3 (namely, the thicker line segment of the bounding box of the object 1).

In a possible implementation, a common boundary line segment 1 between the bounding box of the isolation region 1 and the bounding box of the object 1 is automatically connected to a boundary line segment on a right side of the first image, to obtain a bounding box for determining the isolation region 1. A manner of determining the bounding boxes of the isolation region 2 and the isolation region 3 is similar. Details are not described again.

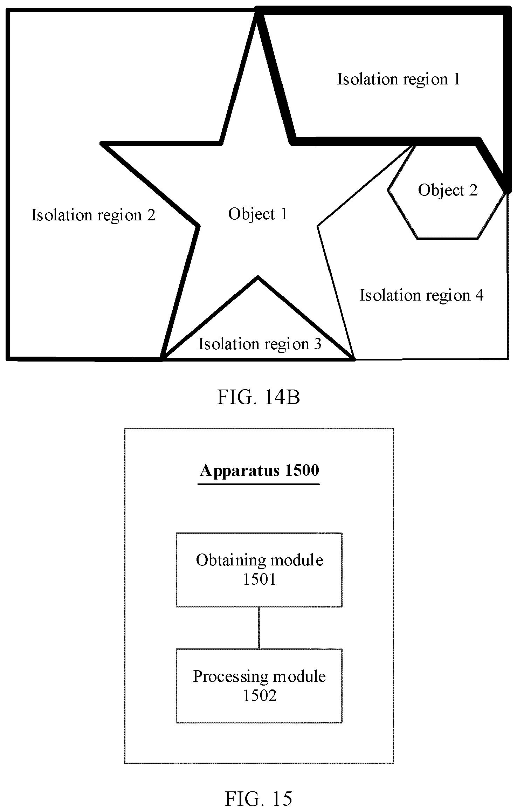

In an actual application, the isolation region may alternatively be obtained by isolating bounding boxes (for example, the first bounding box of the first semantic object and a second bounding box of a second semantic object) of a plurality of semantic objects in the first image. For example, refer to FIG. 14B. The first bounding box is the bounding box of the object 1, and the second bounding box is a bounding box of an object 2. The first image is isolated by the bounding box of the object 1 and the bounding box of the object 2, to obtain the isolation region 1, the isolation region 2, the isolation region 3, and an isolation region 4.

S1303: Generate a second image based on the first image, the first bounding box, and the bounding box of the isolation region.

It should be understood that the second image has a boundary mark, and the boundary mark indicates the bounding box of the isolation region (for example, the bounding box of the isolation region 1 and the bounding box of the isolation region 2 shown in FIG. 14B).

S1304: Input the second image into a recognition model for training, to obtain a trained recognition model.

In a possible implementation, after the recognition model is obtained through optimization training of the second image, a new image is input into the recognition model. The recognition model may output information about a bounding box of an isolation region in the image, and a boundary of the isolation region does not need to be manually annotated.

In this embodiment of this application, the bounding box of the blank region can be determined by using a bounding box (for example, the bounding box of the object 1 and the bounding box of the object 2 in FIG. 14B) of an annotated semantic object in the first image, to effectively improve annotation efficiency of the isolation region in the first image. This effectively improves efficiency of obtaining sample data, and achieves effect of optimizing precision of the recognition model. In combination with an autonomous driving scenario, the recognition model can automatically recognize an isolation region of a road surface formed through isolation by a green belt and a vehicle, to facilitate vehicle route planning, and implement functions such as autonomous driving and assisted driving.

In this embodiment of this application, bounding boxes that respectively correspond to two isolation regions and that are formed through isolation by the first bounding box in the first image can be automatically determined by using a bounding box (for example, the first bounding box) of an annotated semantic object in the first image and a boundary information of the first image. This effectively improves annotation efficiency of an isolation region in the first image, further effectively improves efficiency of obtaining sample data, and can achieve effect of optimizing precision of the recognition model.

In an actual application, the three recognition model training methods may further be applied to the field of image processing. For example, the method can be applied to image processing software.

In an implementation, the recognition model training method shown in FIG. 4 is applied to the image processing software. The image processing software may be configured to automatically update layers on which a first semantic object and a second semantic object in a to-be-processed image are located. For example, if a layer on which a character is located is occluded by a layer on which a tree is located, the layer on which the character is located is automatically updated to form a boundary mark between the character and the tree. This makes the image more vivid.

In another implementation, the recognition model training method shown in FIG. 11 is applied to the image processing software. The image processing software may be configured to automatically cut out a layer on which a blank region is located and that includes bounding boxes of different semantic objects in a to-be-processed image and a bounding box corresponding to a boundary of the to-be-processed image. For example, a bounding box of an image region other than a character in an image is determined. This can effectively improve layer cutting efficiency, and effectively reduce labor costs.

In another implementation, the recognition model training method shown in FIG. 13 is applied to the image processing software. The image processing software may be configured to automatically cut out a layer on which an isolation region formed through isolation by a bounding box of a specially defined object is located in a to-be-processed image. For example, a bounding box that is isolated by a green belt and that is of an image region in an image is determined. This can effectively improve layer cutting efficiency, and effectively reduce labor costs.

The foregoing embodiments may be combined with each other to achieve different technical effect.

With reference to the accompanying drawings, the following describes apparatuses configured to implement the foregoing methods in embodiments of this application. Therefore, all the foregoing content may be used in the following embodiments. Repeated content is not described again.

FIG. 15 is a schematic diagram of a possible structure of the model training apparatus in the foregoing embodiments of this application. The apparatus 1500 may be configured to implement the method in the embodiment shown in FIG. 4.

For example, the apparatus 1500 may include:
an obtaining module 1501, configured to obtain a first image, where the first image includes at least two semantic objects, and the at least two semantic objects include a first semantic object and a second semantic object; and
a processing module 1502, configured to: update a bounding box of the first semantic object based on a first location relationship between a first bounding box of the first semantic object and a second bounding box of the second semantic object, to obtain an updated first bounding box of the first semantic object, where the first location relationship includes any one of external tangency, internal tangency, and intersection, and the updated first bounding box and the second bounding box have a same first target directed line segment; generate a second image based on the first image, the second bounding box, and the updated first bounding box; and input the second image into a recognition model for training, to obtain a trained recognition model.

In a possible design, before updating the bounding box of the first semantic object, the obtaining module 1501 may be further configured to receive a first operation. The processing module 1502 may determine the first bounding box as a first layer and the second bounding box as a second layer based on the first operation, where the first target directed line segment is located on the second layer.

In a possible design, when the obtaining module 1501 is configured to obtain the first image, the obtaining module 1501 is specifically configured to: obtain a bounding box of at least one semantic object, and perform random combination on the bounding box of the at least one semantic object to obtain the first image; and/or obtain a third image, and process the third image to obtain the first image.

In a possible design, when the processing module 1502 is configured to update the bounding box of the first semantic object based on the first location relationship between the first bounding box of the first semantic object and the second bounding box of the second semantic object, the processing module 1502 is specifically configured to: determine at least two intersection points between the first bounding box and the second bounding box; split the first bounding box into at least two first directed line segments and split the second bounding box into at least two second directed line segments based on the at least two intersection points; determine, based on the first location relationship, a first directed line segment located outside the second bounding box and a second directed line segment located inside the first bounding box; and determine the updated first bounding box based on the first directed line segment located outside the second bounding box and the second directed line segment located inside the first bounding box. The first directed line segment and the second directed line segment each include a start point and an end point.

In a possible design, when the processing module 1502 is configured to determine the updated first bounding box based on the first directed line segment located outside the second bounding box and the second directed line segment located inside the first bounding box, the processing module 1502 is specifically configured to: connect the first directed line segment located outside the second bounding box and the second directed line segment located inside the first bounding box, to obtain the updated first bounding box.

In a possible design, when determining, based on the first location relationship, that the at least two second directed line segments includes a second directed line segment located on the first bounding box, the processing module 1502 determines that the second directed line segment is the second directed line segment located inside the first bounding box; or when determining, based on the first location relationship, that the at least two first directed line segments include a first directed line segment located on the second bounding box, the processing module 1502 determines that the first directed line segment is a first directed line segment located inside the second bounding box.

In a possible design, when the processing module 1502 is configured to determine the at least two intersection points between the first bounding box and the second bounding box, the processing module 1502 is specifically configured to: determine that any first directed line segment is not parallel to any second directed line segment, and there is a first intersection point between the any first directed line segment and the any second directed line segment; determine that the first intersection point is on the any first directed line segment and the any second directed line segment; and determine the first intersection point as any intersection point in the at least two intersection points if the first intersection point is not the end point of the any first directed line segment or the end point of the any second directed line segment.

In a possible design, when the processing module 1502 is configured to determine that the first intersection point is on the any first directed line segment and the any second directed line segment, the processing module 1502 is specifically configured to: determine that a distance between the first intersection point and the any first directed line segment is less than a first threshold, to determine that the first intersection point is on the any first directed line segment; and/or determine that a distance between the first intersection point and the any second directed line segment is less than a second threshold, to determine that the first intersection point is on the any second directed line segment.

In a possible design, when the processing module 1502 is configured to determine the at least two intersection points between the first bounding box and the second bounding box, the processing module 1502 is specifically configured to: determine that there is a second intersection point between the any first directed line segment and the any second directed line segment; and use the second intersection point and the first intersection point as a same intersection point when a distance between the second intersection point and the first intersection point is less than a third threshold.

In a possible design, determining the at least two intersection points between the first bounding box and the second bounding box may include: determining that any first directed line segment is parallel to any second directed line segment, where the any first directed line segment includes a first start point and a first end point, and the any second directed line segment includes a second start point and a second end point; if determining that a distance between the first start point or the first end point and the any second directed line segment is less than a fourth threshold, determining that the any first directed line segment coincides with the any second directed line segment; or if determining that a distance between the second start point or the second end point and the any first directed line segment is less than a fifth threshold, determining that the any first directed line segment coincides with the any second directed line segment; and determining the first start point and/or the second start point as any intersection point in the at least two intersection points.

In a possible design, the processing module 1502 may determine the second start point as any intersection point between the first bounding box and the second bounding box when the second start point is on the any first directed line segment. Alternatively, the processing module 1502 may determine the first start point as any intersection point between the first bounding box and the second bounding box when the first start point is on the any second directed line segment.

In a possible design, the at least two semantic objects further include a third semantic object. After obtaining the updated first bounding box of the first semantic object, the processing module 1502 is further configured to: determine that a third bounding box of the third semantic object is located inside the first bounding box; if determining that the third bounding box of the third semantic object is internally tangent to the updated first bounding box, update the bounding box of the first semantic object again, to obtain a first bounding box that is obtained after a second update and that is of the first semantic object, where the third bounding box and the first bounding box obtained after the second update have a same second target directed line segment; generate a fourth image based on the first image, the second bounding box, the third bounding box, and the first bounding box obtained after the second update; and retrain the trained recognition model based on the fourth image, to obtain a new recognition model.

In a possible design, the updated first bounding box includes a first sub-bounding box and a second sub-bounding box when the first location relationship is intersection. That is, the first bounding box is truncated by the second bounding box, where "truncated" may be understood as that the first bounding box is occluded by the second bounding box. The second bounding box and each of the first sub-bounding box and the second sub-bounding box have a common boundary line segment.

In a possible design, the at least two semantic objects further include a third semantic object. After obtaining the updated first bounding box of the first semantic object, the processing module 1502 is further configured to: if determining that the first sub-bounding box and/or the second sub-bounding box intersects a third bounding box of the third semantic object, update the bounding box of the first semantic object again to obtain a first bounding box obtained after a second update, where the first bounding box obtained after the second update includes three sub-bounding boxes.

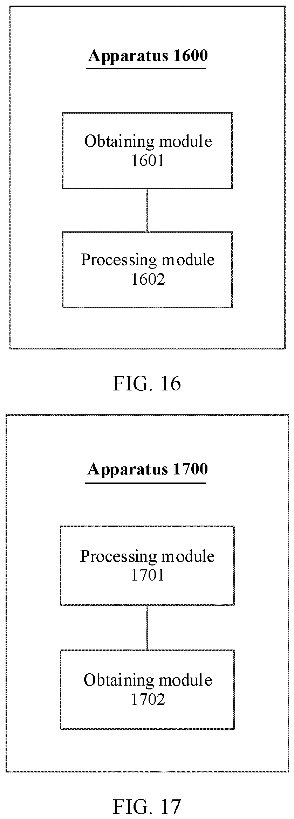

FIG. 16 is a schematic diagram of a possible structure of the model training apparatus in the foregoing embodiments of this application. The apparatus 1600 may be configured to implement the method in the embodiment shown in FIG. 11.

For example, the apparatus 1600 may include:
an obtaining module 1601, configured to obtain a first image, where the first image includes at least two semantic objects, and the at least two semantic objects include a first semantic object and a second semantic object; and
a processing module 1602, configured to: determine a bounding box of a blank region in the first image based on a first bounding box of the first semantic object and a second bounding box of the second semantic object, where the bounding box of the blank region and the first bounding box have a same third target directed line segment, and the bounding box of the blank region and the second bounding box have a same fourth target directed line segment; generate a second image based on the first image, the second bounding box, the first bounding box, and the bounding box of the blank region; and input the second image into a recognition model for training, to obtain a trained recognition model.

FIG. 17 is a schematic diagram of a possible structure of the model training apparatus in the foregoing embodiments of this application. The apparatus 1700 may be configured to implement the method in the embodiment shown in FIG. 13.

For example, the apparatus 1700 may include:
an obtaining module 1701, configured to obtain a first image, where the first image includes at least two semantic objects, and the at least two semantic objects include a first semantic object and a second semantic object; and
a processing module 1702, configured to: determine a bounding box of an isolation region in the first image based on a first bounding box of the first semantic object and a boundary of the first image, where the isolation region is a region that does not intersect a bounding box of the at least one semantic object, the bounding box of the isolation region includes at least two bounding boxes, any bounding box in the at least two bounding boxes and the first bounding box have a same third target directed line segment, and/or the any bounding box in the at least two sub-bounding boxes and the second bounding box have a same fourth target directed line segment; generate a second image based on the first image, the first bounding box, and the bounding box of the isolation region; and input the second image into a recognition model for training, to obtain a trained recognition model.

Based on a same technical concept, an embodiment of this application further provides an electronic device 1800, configured to implement the methods in embodiments shown in FIG. 4, FIG. 11, and FIG. 13.

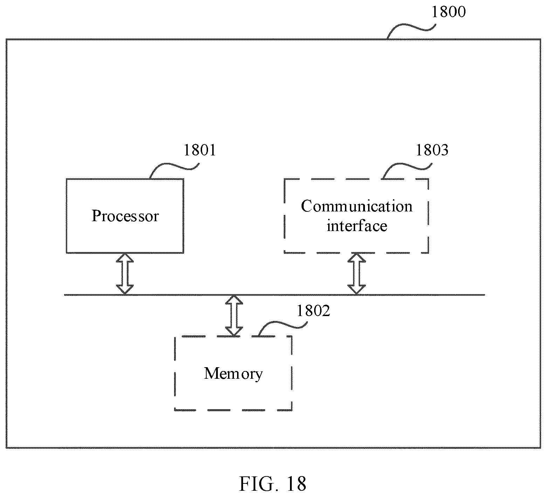

As shown in FIG. 18, the electronic device 1800 may include a processor 1801, configured to execute a program or instructions stored in a memory 1802. When the program or the instructions stored in the memory 1802 are executed, the processor is configured to perform the methods in embodiments shown in FIG. 4, FIG. 11, and FIG. 13.

Optionally, the electronic device 1800 may further include a communication interface 1803. FIG. 18 shows, with dashed lines, that the communication interface 1803 is optional for the electronic device 1800.

A quantity of processors 1801, a quantity of memories 1802, and a quantity of communication interfaces 1803 do not constitute limitations on this embodiment of this application, and during specific implementation, may be randomly configured based on a service requirement.

Optionally, the memory 1802 is located outside the electronic device 1800.

Optionally, the electronic device 1800 includes the memory 1802. The memory 1802 is connected to at least one processor 1801, and the memory 1802 stores instructions that can be executed by the at least one processor 1801. FIG. 18 shows, with dashed lines, that the memory 1802 is optional for the electronic device 1800.

The processor 1801 and the memory 1802 may be coupled through an interface circuit, or may be integrated together. This is not limited herein.

A specific connection medium between the processor 1801, the memory 1802, and the communication interface 1803 is not limited in this embodiment of this application. In this embodiment of this application, in FIG. 18, the processor 1801, the memory 1802, and the communication interface 1803 are connected with each other by using a communication bus 1804. The bus is represented by a thick line in FIG. 18, and connection manners of other components are merely for schematic descriptions and are not construed as a limitation. The bus may be classified into an address bus, a data bus, a control bus, and the like. For ease of representation, only one thick line is used to represent the bus in FIG. 18, but this does not mean that there is only one bus or only one type of bus.

It should be understood that the processor mentioned in embodiments of this application may be implemented by hardware or may be implemented by software. When the processor is implemented by using the hardware, the processor may be a logic circuit, an integrated circuit, or the like. When the processor is implemented by using the software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a discrete gate, a transistor logic device, a discrete hardware component, or the like. The general-purpose processor may be a microprocessor, or the processor may be any conventional processor, or the like.

It may be understood that the memory mentioned in embodiments of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example, and not limitation, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should be noted that the memory described in this application is intended to include but is not limited to these memories and any memory of another proper type.

An embodiment of this application further provides a vehicle. The vehicle may include a processor. The processor is configured to perform the recognition model training methods in the embodiments shown in FIG. 4, FIG. 11, and FIG. 13.

An embodiment of this application further provides a server. The server includes a processor. The processor is configured to perform the recognition model training methods in the embodiments shown in FIG. 4, FIG. 11, and FIG. 13.

In a possible design, the server is a single server or a server cluster including a plurality of sub-servers. When the server is the server cluster including the plurality of sub-servers, the plurality of sub-servers jointly perform the recognition model training methods in the embodiments shown in FIG. 4, FIG. 11, and FIG. 13.

An embodiment of this application further provides a chip system. The chip system includes at least one processor. When program instructions are executed in the at least one processor, the recognition model training methods in the embodiments shown in FIG. 4, FIG. 11, and FIG. 13 are implemented.

In a possible design, the chip system further includes a communication interface, and the communication interface is configured to input or output information.

In a possible design, the chip system further includes a memory. The memory is coupled to the processor through the communication interface, and is configured to store the instructions, so that the processor reads, by using the communication interface, the instructions stored in the memory.

In a possible design, the processor may be a processing circuit. This is not limited in this application.

An embodiment of this application further provides a computer program product including instructions. When the computer program product runs on the foregoing apparatus, the computer program product performs the recognition model training methods in the embodiments shown in FIG. 4, FIG. 11, and FIG. 13.

An embodiment of this application provides a computer-readable storage medium. The computer-readable storage medium stores a computer program. When the computer program runs, the recognition model training methods in the embodiments shown in FIG. 4, FIG. 11, and FIG. 13 are implemented.

The foregoing embodiments may be combined with each other to achieve different technical effect.

The foregoing descriptions about implementations allow a person skilled in the art to understand that, for the purpose of convenient and brief description, division into the foregoing functional modules is used as an example for illustration. In an actual application, the foregoing functions may be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, the division into modules or units is merely logical function division and may be other division during an actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objective of the solutions of embodiments.

In addition, each functional unit in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of embodiments of this application, but are not intended to limit the protection scope of embodiments of this application. Any variation or replacement within the technical scope disclosed in this application shall fall within the protection scope of embodiments of this application. Therefore, the protection scope of embodiments of this application shall be subject to the protection scope of the claims.

## Claims

1. A recognition model training method, comprising:
obtaining a first image, wherein the first image comprises at least two semantic objects, and the at least two semantic objects comprise a first semantic object and a second semantic object;
updating a bounding box of the first semantic object based on a first location relationship between a first bounding box of the first semantic object and a second bounding box of the second semantic object, to obtain an updated first bounding box of the first semantic object, wherein the first location relationship comprises one or more of external tangency, internal tangency, and intersection; and the updated first bounding box and the second bounding box have a same first target directed line segment;
generating a second image based on the first image, the second bounding box, and the updated first bounding box; and
inputting the second image into a recognition model for training, to obtain a trained recognition model.

2. The method according to claim 1, wherein before the updating a bounding box of the first semantic object, the method further comprises:
receiving a first operation; and
determining the first bounding box as a first layer and the second bounding box as a second layer based on the first operation, wherein the first target directed line segment is located on the second layer.

3. The method according to claim 1 or 2, wherein the obtaining a first image comprises:
obtaining a bounding box of at least one semantic object, and performing random combination on the bounding box of the at least one semantic object to obtain the first image; and/or
obtaining a third image, and processing the third image to obtain the first image.

4. The method according to any one of claims 1 to 3, wherein the updating a bounding box of the first semantic object based on a first location relationship between a first bounding box of the first semantic object and a second bounding box of the second semantic object comprises:
determining at least two intersection points between the first bounding box and the second bounding box; and splitting the first bounding box into at least two first directed line segments and splitting the second bounding box into at least two second directed line segments based on the at least two intersection points, wherein the first directed line segment and the second directed line segment each comprise a start point and an end point;
determining, based on the first location relationship, a first directed line segment located outside the second bounding box and a second directed line segment located inside the first bounding box; and
determining the updated first bounding box based on the first directed line segment located outside the second bounding box and the second directed line segment located inside the first bounding box.

5. The method according to claim 4, wherein the determining the updated first bounding box based on the first directed line segment located outside the second bounding box and the second directed line segment located inside the first bounding box comprises:
connecting the first directed line segment located outside the second bounding box and the second directed line segment located inside the first bounding box, to obtain the updated first bounding box.

6. The method according to claim 4 or 5, wherein the determining, based on the first location relationship, a second directed line segment located inside the first bounding box comprises:
when determining, based on the first location relationship, that the at least two second directed line segments comprise a second directed line segment located on the first bounding box, determining that the second directed line segment is the second directed line segment located inside the first bounding box.

7. The method according to any one of claims 4 to 6, wherein the determining at least two intersection points between the first bounding box and the second bounding box comprises:
determining that any first directed line segment is not parallel to any second directed line segment, and there is a first intersection point between the any first directed line segment and the any second directed line segment;
determining that the first intersection point is on the any first directed line segment and the any second directed line segment; and
determining the first intersection point as any intersection point in the at least two intersection points if the first intersection point is not the end point of the any first directed line segment or the end point of the any second directed line segment.

8. The method according to claim 7, wherein the determining that the first intersection point is on the any first directed line segment and the any second directed line segment comprises:
determining that a distance between the first intersection point and the any first directed line segment is less than a first threshold, to determine that the first intersection point is on the any first directed line segment; and/or
determining that a distance between the first intersection point and the any second directed line segment is less than a second threshold, to determine that the first intersection point is on the any second directed line segment.

9. The method according to claim 7 or 8, wherein the determining at least two intersection points between the first bounding box and the second bounding box comprises:
determining that there is a second intersection point between the any first directed line segment and the any second directed line segment; and
using the second intersection point and the first intersection point as a same intersection point when a distance between the second intersection point and the first intersection point is less than a third threshold.

10. The method according to any one of claims 4 to 6, wherein the determining at least two intersection points between the first bounding box and the second bounding box comprises:
determining that any first directed line segment is parallel to any second directed line segment, wherein the any first directed line segment comprises a first start point and a first end point, and the any second directed line segment comprises a second start point and a second end point;
if determining that a distance between the first start point or the first end point and the any second directed line segment is less than a fourth threshold, determining that the any first directed line segment coincides with the any second directed line segment; or if determining that a distance between the second start point or the second end point and the any first directed line segment is less than a fifth threshold, determining that the any first directed line segment coincides with the any second directed line segment; and
determining the first start point and/or the second start point as any intersection point in the at least two intersection points.

11. The method according to claim 10, wherein the determining the first start point and/or the second start point as any intersection point in the at least two intersection points comprises:
determining the second start point as the any intersection point when the second start point is on the any first directed line segment; or
determining the first start point as the any intersection point when the first start point is on the any second directed line segment.

12. The method according to any one of claims 1 to 11, wherein the at least two semantic objects further comprise a third semantic object; and
after the updated first bounding box of the first semantic obj ect is obtained, the method further comprises:
determining that a third bounding box of the third semantic object is located inside the first bounding box;
if determining that the third bounding box of the third semantic object is internally tangent to the updated first bounding box, updating the bounding box of the first semantic object again, to obtain a first bounding box that is obtained after a second update and that is of the first semantic object, wherein the third bounding box and the first bounding box obtained after the second update have a same second target directed line segment;
generating a fourth image based on the first image, the second bounding box, the third bounding box, and the first bounding box obtained after the second update; and
retraining the trained recognition model based on the fourth image, to obtain a new recognition model.

13. The method according to any one of claims 1 to 11, wherein the updated first bounding box comprises a first sub-bounding box and a second sub-bounding box when the first location relationship is intersection.

14. The method according to claim 13, wherein the at least two semantic objects further comprise a third semantic object; and
after the updated first bounding box of the first semantic obj ect is obtained, the method further comprises:
if determining that the first sub-bounding box and/or the second sub-bounding box intersects a third bounding box of the third semantic object, updating the bounding box of the first semantic object again, to obtain a first bounding box obtained after a second update, wherein the first bounding box obtained after the second update comprises three sub-bounding boxes.

15. A recognition model training method, comprising:
obtaining a first image, wherein the first image comprises at least two semantic objects, and the at least two semantic objects comprise a first semantic object and a second semantic object;
determining a bounding box of a blank region in the first image based on a first bounding box of the first semantic object and a second bounding box of the second semantic object, wherein the bounding box of the blank region and the first bounding box have a same third target directed line segment, and the bounding box of the blank region and the second bounding box have a same fourth target directed line segment;
generating a second image based on the first image, the second bounding box, the first bounding box, and the bounding box of the blank region; and
inputting the second image into a recognition model for training, to obtain a trained recognition model.

16. A recognition model training method, comprising:
obtaining a first image, wherein the first image comprises at least one semantic object, and the at least one semantic object comprises a first semantic object;
determining a bounding box of an isolation region in the first image based on a first bounding box of the first semantic object and a boundary of the first image, wherein the isolation region is a region that does not intersect a bounding box of the at least one semantic object, the bounding box of the isolation region comprises at least two bounding boxes, and any bounding box in the at least two bounding boxes and the first bounding box have a same third target directed line segment, and/or the any bounding box in the at least two bounding boxes and the second bounding box have a same fourth target directed line segment;
generating a second image based on the first image, the first bounding box, and the bounding box of the isolation region; and
inputting the second image into a recognition model for training, to obtain a trained recognition model.

17. A recognition model training apparatus, comprising:
an obtaining module, configured to obtain a first image, wherein the first image comprises at least two semantic objects, and the at least two semantic objects comprise a first semantic object and a second semantic object;
a processing module, configured to: update a bounding box of the first semantic object based on a first location relationship between a first bounding box of the first semantic object and a second bounding box of the second semantic object, to obtain an updated first bounding box of the first semantic object, wherein the first location relationship comprises any one of external tangency, internal tangency, and intersection, and the updated first bounding box and the second bounding box have a same first target directed line segment; generate a second image based on the first image, the second bounding box, and the updated first bounding box; and input the second image into a recognition model for training, to obtain a trained recognition model.

18. The apparatus according to claim 17, wherein the obtaining module is further configured to receive a first operation before the processing module is configured to update the bounding box of the first semantic object; and
before the processing module is configured to update the bounding box of the first semantic object, the processing module is further configured to:
determine the first bounding box as a first layer and the second bounding box as a second layer based on the first operation, wherein the first target directed line segment is located on the second layer.

19. The apparatus according to claim 17 or 18, wherein when the obtaining module is configured to obtain the first image, the obtaining module is specifically configured to:
obtain a bounding box of at least one semantic object, and perform random combination on the bounding box of the at least one semantic object to obtain the first image; and/or
obtain a third image, and process the third image to obtain the first image.

20. The apparatus according to any one of claims 17 to 19, wherein when the processing module is configured to update the bounding box of the first semantic object based on the first location relationship between the first bounding box of the first semantic object and the second bounding box of the second semantic object, the processing module is specifically configured to:
determine at least two intersection points between the first bounding box and the second bounding box; and split the first bounding box into at least two first directed line segments and split the second bounding box into at least two second directed line segments based on the at least two intersection points, wherein the first directed line segment and the second directed line segment each comprise a start point and an end point;
determine, based on the first location relationship, a first directed line segment located outside the second bounding box and a second directed line segment located inside the first bounding box; and
determine the updated first bounding box based on the first directed line segment located outside the second bounding box and the second directed line segment located inside the first bounding box.

21. The apparatus according to claim 20, wherein when the processing module is configured to determine the updated first bounding box based on the first directed line segment located outside the second bounding box and the second directed line segment located inside the first bounding box, the processing module is specifically configured to:
connect the first directed line segment located outside the second bounding box and the second directed line segment located inside the first bounding box, to obtain the updated first bounding box.

22. The apparatus according to claim 20 or 21, wherein when the processing module is configured to determine, based on the first location relationship, the second directed line segment located inside the first bounding box, the processing module is specifically configured to:
when determining, based on the first location relationship, that the at least two second directed line segments comprise a second directed line segment located on the first bounding box, determine that the second directed line segment is the second directed line segment located inside the first bounding box.

23. The apparatus according to any one of claims 20 to 22, wherein when the processing module is configured to determine the at least two intersection points between the first bounding box and the second bounding box, the processing module is specifically configured to:
determine that any first directed line segment is not parallel to any second directed line segment, and there is a first intersection point between the any first directed line segment and the any second directed line segment;
determine that the first intersection point is on the any first directed line segment and the any second directed line segment; and
determine the first intersection point as any intersection point in the at least two intersection points if the first intersection point is not the end point of the any first directed line segment or the end point of the any second directed line segment.

24. The apparatus according to claim 23, wherein when the processing module is configured to determine that the first intersection point is on the any first directed line segment and the any second directed line segment, the processing module is specifically configured to:
determine that a distance between the first intersection point and the any first directed line segment is less than a first threshold, to determine that the first intersection point is on the any first directed line segment; and/or
determine that a distance between the first intersection point and the any second directed line segment is less than a second threshold, to determine that the first intersection point is on the any second directed line segment.

25. The apparatus according to claim 23 or 24, wherein when the processing module is configured to determine the at least two intersection points between the first bounding box and the second bounding box, the processing module is specifically configured to:
determine that there is a second intersection point between the any first directed line segment and the any second directed line segment; and
use the second intersection point and the first intersection point as a same intersection point when a distance between the second intersection point and the first intersection point is less than a third threshold.

26. The apparatus according to any one of claims 20 to 22, wherein when the processing module is configured to determine the at least two intersection points between the first bounding box and the second bounding box, the processing module is specifically configured to:
determine that any first directed line segment is parallel to any second directed line segment, wherein the any first directed line segment comprises a first start point and a first end point, and the any second directed line segment comprises a second start point and a second end point;
if determining that a distance between the first start point or the first end point and the any second directed line segment is less than a fourth threshold, determine that the any first directed line segment coincides with the any second directed line segment; or if determining that a distance between the second start point or the second end point and the any first directed line segment is less than a fifth threshold, determine that the any first directed line segment coincides with the any second directed line segment; and
determine the first start point and/or the second start point as any intersection point in the at least two intersection points.

27. The apparatus according to claim 26, wherein when the processing module is configured to determine the first start point and/or the second start point as the any intersection point in the at least two intersection points, the processing module is specifically configured to:
determine the second start point as the any intersection point when the second start point is on the any first directed line segment; or
determine the first start point as the any intersection point when the first start point is on the any second directed line segment.

28. The apparatus according to any one of claims 17 to 27, wherein the at least two semantic objects further comprise a third semantic object; and
after the processing module is configured to obtain the updated first bounding box of the first semantic object, the processing module is further configured to:
determine that a third bounding box of the third semantic object is located inside the first bounding box;
if determining that the third bounding box of the third semantic object is internally tangent to the updated first bounding box, update the bounding box of the first semantic object again, to obtain a first bounding box that is obtained after a second update and that is of the first semantic object, wherein the third bounding box and the first bounding box obtained after the second update have a same second target directed line segment;
generate a fourth image based on the first image, the second bounding box, the third bounding box, and the first bounding box obtained after the second update; and
retrain the trained recognition model based on the fourth image, to obtain a new recognition model.

29. The apparatus according to any one of claims 17 to 27, wherein the updated first bounding box comprises a first sub-bounding box and a second sub-bounding box when the first location relationship is intersection.

30. The apparatus according to claim 29, wherein the at least two semantic objects further comprise a third semantic object; and
after the processing module is configured to obtain the updated first bounding box of the first semantic object, the processing module is further configured to:
if determining that the first sub-bounding box and/or the second sub-bounding box intersects a third bounding box of the third semantic object, update the bounding box of the first semantic object again to obtain a first bounding box obtained after a second update, wherein the first bounding box obtained after the second update comprises three sub-bounding boxes.

31. A recognition model training apparatus, comprising:
an obtaining module, configured to obtain a first image, wherein the first image comprises at least two semantic objects, and the at least two semantic objects comprise a first semantic object and a second semantic object; and
a processing module, configured to: determine a bounding box of a blank region in the first image based on a first bounding box of the first semantic object and a second bounding box of the second semantic object, wherein the bounding box of the blank region and the first bounding box have a same third target directed line segment, and the bounding box of the blank region and the second bounding box have a same fourth target directed line segment; generate a second image based on the first image, the second bounding box, the first bounding box, and the bounding box of the blank region; and input the second image into a recognition model for training, to obtain a trained recognition model.

32. A recognition model training apparatus, comprising:
an obtaining module, configured to obtain a first image, wherein the first image comprises at least one semantic object, and the at least one semantic object comprises a first semantic object; and
a processing module, configured to: determine a bounding box of an isolation region in the first image based on a first bounding box of the first semantic object and a boundary of the first image, wherein the isolation region is a region that does not intersect a bounding box of the at least one semantic object, the bounding box of the isolation region comprises at least two sub-bounding boxes, any sub-bounding box in the at least two sub-bounding boxes and the first bounding box have a same third target directed line segment, and/or the any sub-bounding box in the at least two sub-bounding boxes and the second bounding box have a same fourth target directed line segment; generate a second image based on the first image, the first bounding box, and the bounding box of the isolation region; and input the second image into a recognition model for training, to obtain a trained recognition model.

33. A computer-readable storage medium, wherein the computer-readable storage medium stores a computer program, and when the computer program is run, the method according to any one of claims 1 to 16 is implemented.

34. A chip, comprising a processor and a communication interface, wherein the communication interface is configured to input or output information, and the processor is configured to read instructions to perform the method according to any one of claims 1 to 16.

35. A vehicle, comprising a processor, wherein the processor is configured to perform the method according to any one of claims 1 to 16.

36. A server, comprising a processor, wherein the processor is configured to perform the method according to any one of claims 1 to 16.
